(19) Europäisches Patentamt / European Patent Office / Office européen des brevets

(11) **EP 4 529 316 A1**

(12) **EUROPEAN PATENT APPLICATION**
published in accordance with Art. 153(4) EPC

(43) Date of publication:
26.03.2025  Bulletin 2025/13

(21) Application number: 23807043.7

(22) Date of filing: 18.05.2023

(51) International Patent Classification (IPC):
*H04W 72/04* (2023.01)

(52) Cooperative Patent Classification (CPC):
H04B 7/0417; H04B 7/0456; H04L 5/00;
H04W 72/04

(86) International application number:
PCT/CN2023/095097

(87) International publication number:
WO 2023/222093 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.05.2022  CN 202210550694

(71) Applicant: Vivo Mobile Communication Co., Ltd.
Dongguan, Guangdong 523863 (CN)

(72) Inventors:
• YUAN, Jiangwei
  Dongguan, Guangdong 523863 (CN)
• WU, Hao
  Dongguan, Guangdong 523863 (CN)

(74) Representative: Shieldmark
P.O. Box 90471
2509 LL The Hague (NL)

(54) **PMI PARAMETER FEEDBACK METHOD FOR MULTI-TRP JOINT TRANSMISSION, APPARATUS, TERMINAL, AND NETWORK SIDE DEVICE**

(57)  This application discloses a PMI parameter feedback method and apparatus for multi-TRP joint transmission, a terminal, and a network side device, which belong to the field of wireless communications. The PMI parameter feedback method for multi-TRP joint transmission in embodiments of this application includes: determining, by a terminal according to target information, that one parameter value is fed back for a target PMI parameter corresponding to multiple target reference signals among multiple reference signals, where the multiple reference signals are configured by a network side for determining a PMI parameter for joint transmission, and one of the reference signals is associated with one TRP; and transmitting, by the terminal, a PMI parameter for multi-TRP joint transmission, where for the target PMI parameters of multiple target TRPs associated with the multiple target reference signals, the terminal transmits one parameter value for the target PMI parameters.

200

S210

A terminal determines, according to target information, that one parameter value is fed back for a target PMI parameter corresponding to multiple target reference signals among multiple reference signals

S212

The terminal transmits a PMI parameter for multi-TRP joint transmission, where for the target PMI parameters of multiple target TRPs associated with the multiple target reference signals, the terminal sends one parameter value for the target PMI parameters

FIG. 2

**Description**

**CROSS-REFERENCE TO RELATED APPLICATIONS**

This application claims the priority of Chinese Patent Application No. 202210550694.0 filed to the China National Intellectual Property Administration on May 20, 2022 and entitled "PMI Parameter Feedback Method and Apparatus for Multi-TRP Joint Transmission, Terminal, and Network Side Device", the entire content of which is hereby incorporated by reference.

**TECHNICAL FIELD**

This application belongs to the technical field of wireless communications, and particularly relates to a PMI parameter feedback method and apparatus for multi-TRP joint transmission, a terminal, and a network side device.

**BACKGROUND**

Coordinated multiple points (Coordinated Multiple Points, CoMP) transmission refers to that multiple geographically separated transmission reception points (Transmission Reception Point, TRPs) are coordinated to transmit data for a terminal or jointly receive data transmitted by a terminal. Multiple transmission points participating in cooperation usually refer to base stations in different cells. Multiple cell base stations may cooperate to use an interference signal as a useful signal, thereby reducing the interference between cells and improving the spectrum utilization rate of a system.
Each common CoMP scheme may be grouped into one of the following categories: joint processing (Joint Processing, JP) or collaborative scheduling (Collaborative Scheduling, CS)/coordinated beamforming (Coordinated Beamforming, CB).
Joint processing (JP) refers to data of a terminal (User Equipment) UE being available on more than one time frequency resource point in a CoMP cooperative set, including:

(1) Joint transmission (Joint Transmission, JT). For example, data is transmitted simultaneously to one UE or multiple UEs in one time frequency resource from multiple points (part of the CoMP cooperative set or the entire CoMP cooperation set). Alternatively, data is transmitted from multiple points to the UE simultaneously. For example, received signal quality and/or data throughput is improved (coherently or non-coherently).
(2) Dynamic point selection (Dynamic Point Selection, DPS)/frequency modulation. Data is transmitted from one point (within the CoMP cooperative set) in one time frequency resource. A transmitting/mixing point may change from one subframe to another subframe, including changes on RB pairs within one subframe. Data is available at multiple points simultaneously. Dynamic point selection/frequency modulation may include dynamic cell selection (Dynamic Cell Selection, DCS).
(3) DPS in combination with JT. In this case, multiple points in the time frequency resource may be selected for data transmission. Collaborative scheduling/coordinated beamforming (CS/CB) refers to that for one time frequency resource, data of a UE is only available at and transmitted from one point of the CoMP cooperative set (downlink (Downlink, DL) data transmission starts from this point), but the decision of user scheduling/beamforming is collaborated between corresponding points of the CoMP cooperative set. The selection of a transmission point is semi-static, namely semi-static point selection (Semi-Static Point Selection, SSPS). In other words, each time transmission is performed from a point to a specific UE, the transmission point can only be changed in a semi-static mode.

In the related art, considering the problem of precoding matrix indicator (Precoding matrix indicator, PMI) feedback overheads, the design of a codebook increases frequency domain compression, expands the number of supported highest ranks (Rank) to 4, and increases the distribution of non-zero coefficients for PMI feedback indicated by a Bitmap mode. The codebook generation of each layer may be represented by the following formula:

$$W = W_1 \widetilde{W}_2 W_{\mathrm{f}}^{\mathrm{H}}$$

$$W_1 = \begin{bmatrix} v_0 v_1 \dots v_{L-1} & 0 \\ 0 & v_0 v_1 \dots v_{L-1} \end{bmatrix},$$

where $v_i$, $i \in \{0,1, ..., L - 1\}$ represents a DFT beam vector of dimension $N_1 N_2 \times 1$.

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)}\varphi_{0,0} & \cdots & p_{0,Mv-1}^{(2)}\varphi_{0,Mv-1} \\ \vdots & \ddots & \vdots \\ p_{2L-1,0}^{(2)}\varphi_{2L-1,0} & \cdots & p_{2L-1,Mv-1}^{(2)}\varphi_{2L-1,Mv-1} \end{bmatrix},$$

where the value of $p_i^{(1)}$, $i \in \{0,1, ..., L - 1\}$ is identical, which is an amplitude coefficient of a polarization direction $r = 0$, the value of $p_i^{(1)}$, $i \in \{L, L + 1, ... ,2L - 1\}$ is identical, which is an amplitude coefficient of a polarization direction $r = 1$, and $p_{i,m}^{(2)}$ and $\varphi_{i,m}$ are an amplitude coefficient and a phase coefficient corresponding to beam $i$ of tap m. $W_f = [f_0 f_1 ... f_{Mv-1}]$, where $f_i$, $i \in \{0,1, ..., Mr - 1\}$ represents a discrete Fourier transform (Discrete Fourier Transform, DFT) vector of dimension 1 $\times$ $N_3$. During PMI feedback, the terminal feeds back codebook coefficients for obtaining or indicating $\boldsymbol{W_1}$, $\boldsymbol{\tilde{W}_2}$ and $\boldsymbol{W_f}$.

However, since the current codebook parameter definition and parameter value selection are mainly performed for the PMI of one TRP, the PMI parameter feedback method in the related art is not applicable to a scenario of multi-TRP cooperative transmission.

## SUMMARY

Embodiments of this application provide a PMI parameter feedback method and apparatus for multi-TRP joint transmission, a terminal, and a network side device, which can solve the problem that the PMI parameter feedback method in the related art is not applicable to a scenario of multi-TRP cooperative transmission.

According to a first aspect, there is provided a PMI parameter feedback method for multi-TRP joint transmission. The method includes: determining, by a terminal according to target information, that one parameter value is fed back for a target PMI parameter corresponding to multiple target reference signals among multiple reference signals, where the multiple reference signals are configured by a network side for determining a PMI parameter for joint transmission, and one of the reference signals is associated with one TRP; and transmitting, by the terminal, a PMI parameter for multi-TRP joint transmission, where for the target PMI parameters of multiple target TRPs associated with the multiple target reference signals, the terminal transmits one parameter value for the target PMI parameters.

According to a second aspect, there is provided a PMI parameter feedback apparatus for multi-TRP joint transmission, including: a first determination module, configured to determine according to target information that one parameter value is fed back for a target PMI parameter corresponding to multiple target reference signals among multiple reference signals, where the multiple reference signals are configured by a network side for determining a PMI parameter for joint transmission, and one of the reference signals is associated with one TRP; and a first transmitting module, configured to transmit a PMI parameter for multi-TRP joint transmission, where for the target PMI parameters of multiple target TRPs associated with the multiple target reference signals, the terminal transmits one parameter value for the target PMI parameters.

According to a third aspect, there is provided a PMI parameter feedback method for multi-TRP joint transmission, including: obtaining, by a terminal, target PMI parameters corresponding to multiple reference signals, where the multiple reference signals are reference signals configured for determining a target PMI parameter for joint transmission, one of the reference signals is associated with one TRP, and the multiple reference signals include a first reference signal and a second reference signal; obtaining, by the terminal, an offset of a first target PMI parameter corresponding to the first reference signal relative to a second target PMI parameter corresponding to the second reference signal; and transmitting, by the terminal, the second target PMI parameter and an offset of the first target PMI parameter relative to the second target PMI parameter.

According to a fourth aspect, there is provided a PMI parameter feedback apparatus for multi-TRP joint transmission, including: a first obtaining module, configured to obtain target PMI parameters corresponding to multiple reference signals, where the multiple reference signals are reference signals configured for determining a target PMI parameter for joint transmission, one of the reference signals is associated with one TRP, and the multiple reference signals include a first reference signal and a second reference signal; a second obtaining module, configured to obtain an offset of a first target PMI parameter corresponding to the first reference signal relative to a second target PMI parameter corresponding to the second reference signal; and a second transmitting module, configured to transmit the second target PMI parameter and an offset of the first target PMI parameter relative to the second target PMI parameter.

According to a fifth aspect, there is provided a PMI parameter obtaining method for multi-TRP joint transmission, including: configuring, by a network side device for a terminal, multiple reference signals for determining a PMI parameter for joint transmission, where one of the reference signals is associated with one TRP; receiving, by the network side device, a PMI parameter for multi-TRP joint transmission transmitted by the terminal; determining, by the network side device according to target information, that one parameter value is fed back for a target PMI parameter corresponding to multiple target reference signals among the multiple reference signals; and obtaining, by the network side device, parameter values of the target PMI parameters from the received PMI parameters, and obtaining parameter values of the target PMI parameters corresponding to the multiple target reference signals according to the parameter values of the target PMI parameters.

According to a sixth aspect, there is provided a PMI parameter obtaining apparatus for multi-TRP joint transmission, including: a first configuration module, configured to configure for a terminal multiple reference signals for determining a PMI parameter for joint transmission, where one of the reference signals is associated with one TRP; a first receiving module, configured to receive a PMI parameter for multi-TRP joint transmission transmitted by the terminal; a second determination module, configured to determine according to target information that one parameter value is fed back for a target PMI parameter corresponding to multiple target reference signals among the multiple reference signals; and a third obtaining module, configured to obtain parameter values of the target PMI parameters from the received PMI parameters, and obtain parameter values of the target PMI parameters corresponding to the multiple target reference signals according to the parameter values of the target PMI parameters.

According to a seventh aspect, there is provided a PMI parameter obtaining method for multi-TRP joint transmission, including: configuring, by a network side device for a terminal, multiple reference signals for determining a PMI parameter for joint transmission, where one of the reference signals is associated with one TRP, and the multiple reference signals include a first reference signal and a second reference signal; receiving, by the network side device from the terminal, a second target PMI parameter corresponding to the second reference signal and an offset of a first target PMI parameter corresponding to the first reference signal relative to the second target PMI parameter; and obtaining, by the network side device, the second target PMI parameter corresponding to the second reference signal and the first target PMI parameter corresponding to the first reference signal according to the second target PMI parameter and the offset of the first target PMI parameter relative to the second target PMI parameter.

According to an eighth aspect, there is provided a PMI parameter obtaining apparatus for multi-TRP joint transmission, including: a second configuration module, configured to configure for a terminal multiple reference signals for determining a PMI parameter for joint transmission, where one of the reference signals is associated with one TRP, and the multiple reference signals include a first reference signal and a second reference signal; a second receiving module, configured to receive from the terminal a second target PMI parameter corresponding to the second reference signal and an offset of a first target PMI parameter corresponding to the first reference signal relative to the second target PMI parameter; and a fourth obtaining module, configured to obtain the second target PMI parameter corresponding to the second reference signal and the first target PMI parameter corresponding to the first reference signal according to the second target PMI parameter and the offset of the first target PMI parameter relative to the second target PMI parameter.

According to a ninth aspect, there is provided a terminal. The terminal includes a processor and a memory. The memory stores programs or instructions executable on the processor. The programs or instructions, when executed by the processor, implement the steps of the method according to the first aspect or implement the steps of the method according to the third aspect.

According to a tenth aspect, there is provided a terminal, including a processor and a communication interface. The processor is configured to implement the steps of the method according to the first aspect or implement the steps of the method according to the third aspect. The communication interface is configured to communicate with an external device.

According to an eleventh aspect, there is provided a network side device. The network side device includes a processor and a memory. The memory stores programs or instructions executable on the processor. The programs or instructions, when executed by the processor, implement the steps of the method according to the fifth aspect or implement the steps of the method according to the seventh aspect.

According to a twelfth aspect, there is provided a network side device, including a processor and a communication interface. The processor is configured to implement the steps of the method according to the fifth aspect or implement the steps of the method according to the seventh aspect. The communication interface is configured to communicate with an external device.

According to a thirteenth aspect, there is provided a PMI parameter obtaining system for multi-TRP joint transmission, including: a terminal and a network side device, where the terminal may be configured to execute the steps of the method as described in the first aspect or execute the steps of the method as described in the third aspect, and the network side device may be configured to execute the steps of the method as described in the fifth aspect or execute the steps of the method as described in the seventh aspect.

According to a fourteenth aspect, there is provided a readable storage medium. The readable storage medium stores programs or instructions. The programs or instructions, when executed by a processor, implement steps of the method as described in the first aspect, implement steps of the method as described in the third aspect, implement steps of the method as described in the fifth aspect, or implement steps of the method as described in the seventh aspect.

According to a fifteenth aspect, there is provided a chip. The chip includes a processor and a communication interface. The communication interface is coupled to the processor. The processor is configured to execute programs or instructions to implement the method as described in the first aspect, or implement the method as described in the third aspect, or implement the method as described in the fifth aspect, or implement the method as described in the seventh aspect.

According to a sixteenth aspect, there is provided a computer program/program product. The computer program/program product is stored in a storage medium. The computer program/program product, when executed by at least one processor, implements the steps of the method as described in the first aspect, or implements the method as described in the third aspect, or implements the method as described in the fifth aspect, or implements the method as described in the seventh aspect.

In embodiments of this application, a terminal determines according to target information that only one parameter value is fed back for a target PMI parameter corresponding to multiple target reference signals among multiple reference signals (i.e., associated multiple TRPs). Then, when transmitting a PMI parameter for multi-TRP joint transmission, the terminal feeds back a parameter value for one of target PMIs corresponding to the multiple target reference signals, so that the PMI parameters may be fed back in a case of multi-TRP joint transmission, and the feedback overheads of the PMI parameters can be reduced.

## BRIEF DESCRIPTION OF THE DRAWINGS

FIG. 1 shows a block diagram of a wireless communication system to which embodiments of this application may be applied;

FIG. 2 shows a schematic flowchart of a PMI parameter feedback method for multi-TRP joint transmission according to embodiments of this application;

FIG. 3 shows a schematic flowchart of a PMI parameter obtaining method for multi-TRP joint transmission according to embodiments of this application;

FIG. 4 shows another schematic flowchart of a PMI parameter feedback method for multi-TRP joint transmission according to embodiments of this application;

FIG. 5 shows another schematic flowchart of a PMI parameter obtaining method for multi-TRP joint transmission according to embodiments of this application;

FIG. 6 shows a schematic structural diagram of a PMI parameter feedback apparatus for multi-TRP joint transmission according to embodiments of this application;

FIG. 7 shows a schematic structural diagram of a PMI parameter obtaining apparatus for multi-TRP joint transmission according to embodiments of this application;

FIG. 8 shows another schematic structural diagram of a PMI parameter feedback apparatus for multi-TRP joint transmission according to embodiments of this application;

FIG. 9 shows another schematic structural diagram of a PMI parameter obtaining apparatus for multi-TRP joint transmission according to embodiments of this application;

FIG. 10 shows a schematic structural diagram of a communication device according to embodiments of this application;

FIG. 11 shows a schematic diagram of a hardware structure of a terminal according to embodiments of this application; and

FIG. 12 shows a schematic diagram of a hardware structure of a network side device according to embodiments of this application.

## DETAILED DESCRIPTION

The technical solutions in embodiments of this application are clearly described in the following with reference to the accompanying drawings in the embodiments of this application. Apparently, the described embodiments are merely some, rather than all of the embodiments of this application. All other embodiments obtained by a person of ordinary skill in the art based on the embodiments of this application fall within the protection scope of this application.

The terms "first" and "second" in the specification and claims of this application are used to distinguish similar objects, but are unnecessarily used to describe a specific sequence or order. It will be appreciated that the terms used in this way are exchangeable in a proper case, so that embodiments of this application can be implemented in an order different from the order shown or described herein, and objects distinguished by "first" and "second" are usually of the same category and the number of the objects is not defined. For example, there may be one or more first objects. Furthermore, "and/or" in the specification and claims represents at least one of connected objects, and the character "/" usually represents that previous and next associated objects form an "or" relationship.

It is to be pointed out that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually interchangeably used, and the technologies described may be applied to the systems and radio technologies mentioned above, and may also be applied to other systems and radio technologies. For an exemplary purpose, a new radio (New Radio, NR) system is described in the following description, and the term NR is used in most description below. However, these technologies may also be applied to other applications other than the NR system, for example, a 6th generation (6th Generation, 6G) communication system.

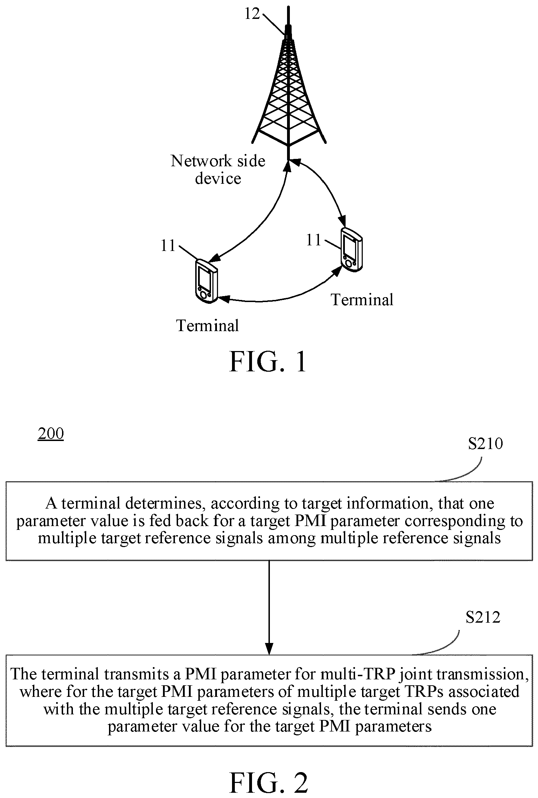

FIG. 1 shows a block diagram of a wireless communication system to which embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a notebook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a washer or furniture), a game machine, a personal computer (personal computer, PC), a teller machine or a self-service machine. The wearable device includes: a smart watch, a smart bracelet, a smart earphone, smart eyeglasses, smart jewelry (a smart bangle, a smart chain bracelet, a smart ring, a smart necklace, a smart leglet, a smart anklet, and the like), a smart wristband, smart clothing, and the like. It is to be noted that the specific type of the terminal 11 is not limited in embodiments of this application. The network side device 12 may include an access network device and/or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point or a Wi-Fi node, etc. The base station may be referred to as a node B, an evolved node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a household node B, a household evolved node B, a transmission reception point (Transmission Reception Point, TRP) or some other appropriate terms in the field provided that the same technical effect is achieved. The base station is not limited to specific technical vocabularies. It is to be noted that in embodiments of this application, only a base station in an NR system is described as an example, but the specific type of the base station is not limited.

In the related art, a codebook R16 TypeII is designed using a beam combination principle. Considering the problem of PMI feedback overheads, the design of the codebook R16 TypeII increases frequency domain compression, expands the number of supported highest Ranks to 4, and increases the distribution of non-zero coefficients for PMI feedback indicated by a Bitmap mode.

The codebook generation of each layer may be represented by the following formula:

$$W = W_1 \widetilde{W}_2 W_f^H$$

where

$$W_1 = \begin{bmatrix} v_0 v_1 \dots v_{L-1} & 0 \\ 0 & v_0 v_1 \dots v_{L-1} \end{bmatrix},$$

where $v_i$, $i \in \{0, 1, \dots, L-1\}$ represents a DFT beam vector of dimension $N_1 N_2 \times 1$.

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)} \varphi_{0,0} & \cdots & p_{0,Mv-1}^{(2)} \varphi_{0,Mv-1} \\ \vdots & \ddots & \vdots \\ p_{2L-1,0}^{(2)} \varphi_{2L-1,0} & \cdots & p_{2L-1,Mv-1}^{(2)} \varphi_{2L-1,Mv-1} \end{bmatrix},$$

where the value of $p_i^{(1)}$, $i \in \{0,1,...,L-1\}$ is identical, which is an amplitude coefficient of a polarization direction r = 0, the value of $p_i^{(1)}$, $i \in \{L, L+1, ...,2L-1\}$ is identical, which is an amplitude coefficient of a polarization direction r = 1, and $p_{i,m}^{(2)}$ and $\varphi_{i,m}$ are an amplitude coefficient and a phase coefficient corresponding to beam i of tap m. $\boldsymbol{W}_f = [\boldsymbol{f_0 f_1 ... f_{Mv-1}}]$, where $\boldsymbol{f_i}$, $i \in [0,1,..., Mv-1\}$ represents a DFT vector of dimension $1 \times N_3$.

The terminal may feed back codebook parameters for obtaining or indicating $\boldsymbol{W_1}$, $\tilde{\boldsymbol{W}}_2$ and $\boldsymbol{W}_f$ in a PMI, and the network side device may obtain $\boldsymbol{W_1}$, $\tilde{\boldsymbol{W}}_2$ and $\boldsymbol{W}_f$ according to the PMI fed back by the terminal.

(1) For $\boldsymbol{W_1}$

L beam vectors $v_{m_1^{(i)},m_2^{(i)}}$, $i = 0,1, ..., L-1$ are calculated according to $i_{1,1}$ and $i_{1,2}$ in the PMI. The modes of confirming the beam vectors and subscripts $m_1^{(i)}, m_2^{(i)}$ are:

$$u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ 1 & N_2 = 1 \end{cases}$$

$$v_{l,m} = \begin{bmatrix} u_m & e^{j\frac{2\pi l}{O_1 N_1}} u_m & \cdots & e^{j\frac{2\pi l(N_1-1)}{O_1 N_1}} u_m \end{bmatrix}^T$$

$$m_1^{(i)} = O_1 n_1^{(i)} + q_1$$

$$m_2^{(i)} = O_2 n_2^{(i)} + q_2$$

where $[q_1, q_2]$ is obtained according to $i_{1,1}$ in the PMI based on the calculation formula:

$$i_{1,1} = \begin{bmatrix} q_1 & q_2 \end{bmatrix}$$

$$q_1 \in \{0,1,...,O_1-1\}$$

$$q_2 \in \{0,1,...,O_2-1\}$$

$[n_1, n_2]$ is obtained according to $i_{1,2}$ in the PMI.

(2) For $\tilde{\boldsymbol{W}}_2$

1) Calculate the amplitude of strongest coefficients

Each strongest coefficient in a polarization direction of layer $l$ is represented as $p_l^{(1)} = \begin{bmatrix} p_{l,0}^{(1)} & p_{l,1}^{(1)} \end{bmatrix}$, where a stronger coefficient is quantized as 1. Therefore, reporting is not required. A less stronger coefficient is indicated by PMI $i_{2,3,l}$, where $i_{2,3,l} = \begin{bmatrix} k_{l,p}^{(1)} \end{bmatrix}$, $p \in \{0,1\}$. A mapping rule from $k_{l,p}^{(1)}$ to $p_{l,p}^{(1)}$ is as shown in Table 1.

Table 1

| $k_{l,p}^{(1)}$ | $p_{l,p}^{(1)}$ |
|---|---|
| 0 | Reserved |
| 1 | $\dfrac{1}{\sqrt{128}}$ |
| 2 | $\left(\dfrac{1}{8192}\right)^{1/4}$ |
| 3 | $\dfrac{1}{8}$ |
| 4 | $\left(\dfrac{1}{2048}\right)^{1/4}$ |
| 5 | $\dfrac{1}{2\sqrt{8}}$ |
| 6 | $\left(\dfrac{1}{512}\right)^{1/4}$ |
| 7 | $\dfrac{1}{4}$ |
| 8 | $\left(\dfrac{1}{128}\right)^{1/4}$ |
| 9 | $\dfrac{1}{\sqrt{8}}$ |
| 10 | $\left(\dfrac{1}{32}\right)^{1/4}$ |
| 11 | $\dfrac{1}{2}$ |
| 12 | $\left(\dfrac{1}{8}\right)^{1/4}$ |
| 13 | $\dfrac{1}{\sqrt{2}}$ |
| 14 | $\left(\dfrac{1}{2}\right)^{1/4}$ |

| $k_{l,p}^{(1)}$ | $p_{l,p}^{(1)}$ |
|---|---|
| 15 | 1 |

2) Calculate each tap amplitude and phase

Each tap amplitude coefficient of layer *l* is represented as:

$$p_l^{(2)} = \left[ p_{l,0}^{(2)} \cdots p_{l,M_v-1}^{(2)} \right]$$

$$p_{l,f}^{(2)} = \left[ p_{l,0,f}^{(2)} \cdots p_{l,2L-1,f}^{(2)} \right]$$

A value thereof determined according to PMI $i_{2,4,l}$ is represented as:

$$i_{2,4,l} = \left[ k_{l,0}^{(2)} \cdots k_{l,M_v-1}^{(2)} \right]$$

$$k_{l,f}^{(2)} = \left[ k_{l,0,f}^{(2)} \cdots k_{l,2L-1,f}^{(2)} \right]$$

$$k_{l,i,f}^{(2)} \in \{0, \dots, 7\}$$

where a mapping rule from $k_{l,p}^{(1)}$ to $p_{l,p}^{(1)}$ is as shown in Table 2.

Table 2

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |

(continued)

| $k_{l,i,f}^{(2)}$ | $p_{l,i,f}^{(2)}$ |
|---|---|
| 5 | $\dfrac{1}{2}$ |
| 6 | $\dfrac{1}{\sqrt{2}}$ |
| 7 | 1 |

Each tap phase of layer $l$ is quantized by 16-phase shift keying (Phase Shift Keying, PSK), and the coefficients are represented as:

$$\varphi_{l,i,f} = e^{j\frac{2\pi c_{l,i,f}}{16}}$$

The coefficients are indicated by PMI $i_{2,5,l} = [c_{l,0} \dots c_{l,M_v-1}]$, where $c_{l,f} = [c_{l,0,f} \dots c_{l,2L-1,f}]$, $c_{l,i,f} \in \{0, \dots, 15\}$.

$i_{2,4,l}$ and $i_{2,5,l}$ only feed back the amplitude and phase of the non-zero and non-strongest coefficients in layer $l$, where the distribution of the non-zero coefficients is indicated by $i_{1,7,l}$ in a Bitmap mode, and both the amplitude and phase are set to 0 for $k_{l,i,f}^{(3)}=0$.

$$i_{1,7,l} = \left[k_{l,0}^{(3)} \dots k_{l,M_v-1}^{(3)}\right]$$

$$k_{l,f}^{(3)} = \left[k_{l,0,f}^{(3)} \dots k_{l,2L-1,f}^{(3)}\right]$$

$$k_{l,i,f}^{(3)} \in \{0,1\}$$

A beam index corresponding to the strongest coefficient is $i_l^*$, which may be obtained from $i_{1,8,l}$ based on the calculation formula:

$$i_{1,8,l} = \begin{cases} \sum\limits_{i=0}^{i_1^*} k_{1,i,0}^{(3)} - 1 & v = 1 \\ i_l^* & 1 < v \le 4 \end{cases}$$

In other words, in a case that rank is equal to 1, $i_{1,8,l}$ indicates that the strongest beam is a beam corresponding to an $i_l^{*\text{th}}$ non-zero coefficient, and in a case that rank is greater than 1, $i_{1,8,l}$ indicates that the strongest beam is an $i_l^{*\text{th}}$ beam.

In the process of calculating a codebook, the UE remaps each tap based on a strongest coefficient tap index $f_l^*$, and the mapped strongest tap index $f_l^*$ is changed to 0. Therefore, the position of the strongest coefficient is known, and an amplitude index $k_{l,i_l^*,0}^{(2)} = 7$ and phase coefficient $c_{l,i_l^*,0} = 0$ thereof are known. UE feedback is not required.

(3) For $W_f^H$

$W_f^H$ includes $Mv$ DFT vectors, where $M_v = \left\lceil p_v \frac{N_3}{R} \right\rceil$, which may be represented as

$W_f^H = [y_{t,l}^{(0)} \ y_{t,l}^{(1)} \ \cdots \ y_{t,l}^{(M_v-1)}]^T$ . $t = \{0, 1, ..., N_3 - 1\}$, where $N_3$ is the number of PMI sub-bands, namely the total number of taps, $Mv$ represents the number of reserved taps, and the calculation formula of $y_{t,l}^{(f)}$, $f = \{0, 1, ..., M_v - 1\}$ is:

$$y_{t,l}^{(f)} = e^{j \frac{2\pi t \ n_{3,l}^{(f)}}{N_3}}$$

$$n_{3,l}^{(f)} \in \{0, 1, ..., N_3 - 1\}$$

where $n_{3,l}^{(f)}$ is $Mv$ remapped tap indexes obtained by the UE, and the remapping rule is:

$$n_{3,l}^{(f)} = \left( n_{3,l}^{(f)} - n_{3,l}^{(f_l^*)} \right) mod \ N_3$$

$$f = (f - f_l^*) mod \ M_v$$

where $f_l^*$ is the strongest coefficient tap index. It can be seen that $n_{3,l}^{(f_l^*)} = 0$ after remapping.

When $N_3 \leq 19$, $n_{3,l}^{(1)}, ..., n_{3,l}^{(M_v-1)}$ is obtained from $i_{1,6,l}$ in the PMI. If $M_v=1$ and $i_{1,6,l}=0$, no feedback is performed.

When $N_3 > 19$, $n_{3,l}^{(1)}, ..., n_{3,l}^{(M_v-1)}$ is obtained from $i_{1,6,l}$ and $M_{initial}$ in the PMI. Only non-zero $n_{3,l}^{(f)}$ is fed back. $M_{initial} \in \{-2M_v + 1, -2M_v + 2, ..., 0\}$ may be obtained from $i_{1,5}$ (note: layer common):

$$i_{1,5} = \begin{cases} M_{initial} & M_{initial} = 0 \\ M_{initial} + 2M_v & M_{initial} < 0 \end{cases}$$

where the process of obtaining $i_{1,6,l}$ and $n_{3,l}^{(f)}$ is consistent with the mode of obtaining a $W_1$ beam sequence number,

which is obtained using a combination number. $n_{3,l}^{(f)}$ which is greater than $M_{initial} + N3 - 1$ is mapped to $0, 1, ..., 2M_v - 1$, and then the combination number is calculated.

In the related art, the PMI coefficients are $i_1$ and $i_2$, where $i_1$ includes $i_{1,1}$, $i_{1,2}$, $i_{1,5}$, $i_{1,6,v}$, $i_{1,7,v}$, and $i_{1,8,v}$, and $i_2$ includes $i_{2,3,v}$, $i_{2,4,v}$, and $i_{2,5,v}$, where v is equal to one or more of 1, 2, 3, and 4. In a case that the value of RI is 2, v is equal to 1 or 2, and in a case that the value of RI is 4, v is equal to 1, 2, 3, or 4, where

$i_{1,1}$ is used for indicating the sequence number of an orthogonal DFT vector group, which is equal to $[q_1, q_2]$, where $q_1 \in \{0, 1, ..., O_1 - 1\}$, $q_2 \in \{0, 1, ..., O_2 - 1\}$, and $O_1, O_2$ is an oversampling factor configured by the network.

$i_{1,2}$ is used for indicating the sequence numbers of L vectors within the orthogonal DFT vector group indicated by $i_{1,1}$, and

$i_{1,2} \in \{0, 1, ..., \binom{N_1 N_2}{L} - 1\}$, where $N1$, $N2$ is a port number parameter configured for the network, L is the number of DFT vectors indicated for the network, and $\binom{N_1 N_2}{L}$ represents a combination number in which L beams are selected

from $N_1N_2$ beams (beam). The mapping of the sequence numbers of $i_{1,2}$ to L DFT vectors is as shown in Table 3.

Table 3

| Sequence numbers of L to $i_{1,2}$ DFT vectors | $$i_{1,2} = \sum_{i=0}^{L-1} \binom{N_1N_2 - 1 - n^i}{L - i}$$ $$n^i = N_1 n_2^i + n_1^i$$ where $n^i$ is a global sequence number of a DFT vector, which is determined by sequence numbers $n_2^i$ and $n_1^i$. The value of $n^i$ increases as i increases. |
|---|---|
| Sequence numbers of $i_{1,2}$ to L DFT vectors | An inverse process of sequence numbers of L to $i_{1,2}$ DFT vectors, as described below<br><br>1. Initialize $s_{-1}=0$.<br>2. Cycle from i=0 to L-1.<br><br>a) Find a maximum x*, where x* ∈ {$L$ - 1 - $i$, ..., $N_1N_2$ - 1 - $i$}, and $i_{1,2}$ - $s_{i-1} \geq \binom{x^*}{L - i}$ .<br>$$e_i = \binom{x^*}{L - i}$$<br>b)<br>c) $s_i = s_{i-1} + e_i$<br>d) $n^i = N_1N_2$ - 1 - x*<br>e) $n_1^i = n^i \bmod N_1$ , where mod represents taking the reminder.<br>$$n_2^i = \frac{(n^i - n_1^i)}{N_1}$$<br>f)<br>3. End the cycle. |

$i_{1,5}$ indicates a starting position $M_{initial}$ of a window having a length of $2M_v$, and $i_{1,5} \in \{0,1, ..., 2M_y - 1\}$, where $M_v$ represents the number of time domain taps. Note: it is only possible that $N_3 > 19$. When $N_3 \leq 19$, $i_{1,5}$ is equal to 0, and the terminal does not need to feed back the coefficient.

$i_{1,6,v}$ is used for indicating the position of $M_v$ tap coefficients fed back by layer (layer) v in $N_3$ tap coefficients. The value is in two cases: when $N_3 > 19$, $i_{1,6,v} \in \left\{0,1, ..., \binom{2M_v - 1}{M_v - 1} - 1\right\}$ , and when $N_3 \leq 19$, $i_{1,6,v} \in \left\{0,1, ..., \binom{N_3 - 1}{M_v - 1} - 1\right\}$ , which may be fed back in the manner of the combination number.

$i_{1,7,v}$ is a non-zero coefficient indicator of layer v, which is a bit (bit) sequence having a total length of $2LM_v$.

$i_{1,8,v}$ is a strongest coefficient indicator of layer v, and $i_{1,8,v} \in \{0,1, ..., 2L - 1\}$, where for the transmission of rank=1, $i_{1,8,v}$ represents an $i_{1,8,v}$th non-zero coefficient, and for the transmission of rank=1, $i_{1,8,v}$ represents an $i_{1,8,v}$th coefficient.

$i_{2,3,v}$ is quantization indicators of two polarized amplitude coefficients of layer v. Each amplitude coefficient is a 4-bit bit string (bit string), and each codepoint (codepoint) corresponds to a quantization value, where the polarized amplitude coefficient corresponding to the strongest coefficient is not fed back and is assumed to be 1.

$i_{2,4,v}$ is quantization indicators of amplitude coefficients of all tap coefficients. Each amplitude coefficient is a 3-bit bit string, each codepoint corresponds to a quantization value, and a total of $2LM_v$ amplitude coefficients are obtained. The amplitude coefficient corresponding to the strongest coefficient is not fed back and is assumed to be 1, and only non-zero amplitude coefficients among the remaining coefficients are fed back. Therefore, the number of total feedback coefficients for layer v is $K_{Nz,v}$ - 1, where $K_{Nz,v}$ represents the number of non-zero amplitude coefficients of layer v.

$i_{2,5,v}$ is quantization indicators of phase coefficients of all tap coefficients. Each phase coefficient is a 4-bit bit string, each codepoint corresponds to a quantization value, and a total of $2LM_v$ phase coefficients are obtained. The phase coefficient corresponding to the strongest coefficient is not fed back and is assumed to be 0, and only phase coefficients corresponding to non-zero amplitude coefficients among the remaining coefficients are fed back. Therefore, the number of total feedback coefficients for layer v is $K_{Nz,v}$ - 1, where $K_{Nz,v}$ represents the number of non-zero amplitude coefficients.

Specifically, the mapping order of the coefficients is as shown in Table 4.

Table 4

| Channel state information (Channel State Information, CSI) part (part) | | Content | Size |
|---|---|---|---|
| CSI part1 | | Indicating the number $K_{Nz}$ of non-zero coefficients of all layers, used for determining the size of each PMI coefficient in Part2; | For the transmission of rank=1, the length is $\lceil \log_2 K_0 \rceil$; for the transmission of rank>1, the length is $\lceil \log_2 2K_0 \rceil$ where $K_0 = \lceil \beta 2L M_0 \rceil$ |
| CSI part2 $i_{1,1}$: $\lceil \log_2 O_1 O_2 \rceil$ $i_{1,7,v}$: $\lfloor K_{NZ}/2 \rfloor$ $i_{2,4,v}$, $i_{2,5,v}$: $\lceil K_{NZ}/2 \rceil$ | Group (Group) 0 | $i_{1,1}$, $1_{1,2}$, $i_{1,8,v}$ | $i_{1,2}$: $\left\lceil \log_2 \binom{N_1 N_2}{L} \right\rceil$ $i_{1,8,v}$: for the transmission of rank=1, $\lceil \log_2 K_{NZ} \rceil$; for the transmission of rank>1, $\lceil \log_2 2L \rceil$ |
| | Group1 | High priority bit of $i_{2,3,v}$, $i_{1,5}$, $i_{1,6,l}$, $i_{2,4,v}$, high priority bit of $i_{2,5,v}$, and high priority bit of $i_{1,7,v}$ | $i_{1,7,v}$: rank * $2LM_v$ - $\lfloor K_{NZ}/2 \rfloor$ $i_{2,4,v}$, $i_{2,5,v}$: $\lceil K_{NZ}/2 \rceil - v$ |
| | Group2 | Low priority bit of $i_{2,4,v}$, low priority bit of $i_{2,5,v}$, and low priority bit of $i_{1,7,v}$ | |

The bit priority of $i_{2,4,v}$, $i_{2,5,v}$, and $i_{1,7,v}$ is determined according to a calculated preferred value of each bit. A higher priority corresponds to a lower preferred value. The calculation formula is:

$$\mathrm{Pri}(l, i, f) = 2 * L * v * \pi(f) + v * i + l$$

$$\pi(f) = min\left(2 * n_{3,l}^{(f)}, 2 * \left(N_3 - n_{3,l}^{(f)}\right) - 1\right)$$

where , *l* = 0,1, ..., *rank* , *i* = 0,1, ..., *2L - 1, and f* = 0,1, ..., *M$_v$ - 1*.

From formula $\pi(f)$, it can be seen that $\pi(f) \in 0,1, ..., N_3$-1, and the ascending order of the values of $n_{3,l}^{(f)}$ is 0, $N_3$ - 1,1, $N_3$ - 2,2, $N_3$ - 3 ....

From formula Pri(l, i, f), it can be seen that the weights of $\pi(f)$, *i,* and *l* are reduced successively. Therefore, it can be seen that the descending order of the priority is as shown in Table 5.

Table 5

| From high priority to low priority | 2L coefficients of a first layer of a 0$^{th}$ delay (delay) |
| --- | --- |
| | ... |
| | 2L coefficients of an *l*$^{th}$ layer of the 0$^{th}$ delay |
| | 2L coefficients of the first layer of an $N_3$ - 1$^{th}$ delay |
| | ... |
| | 2L coefficients of an *l*$^{th}$ layer of an $N_3$ - 1$^{th}$ delay |
| | ... |

It can be seen that the current parameter definition and parameter value selection of an R16 Type2 codebook are mainly performed for the PMI of one TRP. For a multi-TRP joint transmission scheme, if a spatial domain beam of each TRP needs to be fed back, the beam cannot be directly used and there is a certain optimization space to reduce feedback overheads. Therefore, feedback can be enhanced to reduce the feedback overheads.

The PMI parameter feedback scheme for multi-TRP joint transmission according to embodiments of this application will be described in detail with reference to the accompanying drawings through some embodiments and application scenarios thereof.

FIG. 2 shows a schematic flowchart of a PMI parameter feedback method for multi-TRP joint transmission according to embodiments of this application. The method 200 may be performed by a terminal. In other words, the method may be performed by software or hardware installed on the terminal. As shown in FIG. 2, the method may include the following steps.

S210: The terminal determines, according to target information, that one parameter value is fed back for a target PMI parameter corresponding to multiple target reference signals among multiple reference signals.

The multiple reference signals are configured by a network side for determining a PMI parameter for joint transmission, and one of the reference signals is associated with one TRP.

In embodiments of this application, a network side device may obtain, for a terminal, multiple reference signals for determining a PMI parameter for joint transmission, where one of the reference signals is associated with one TRP. In other words, a PMI parameter corresponding to a TRP is obtained through a reference signal.

Optionally, the target information may include one of the following:

(1) a transmission configuration indicator (Transmission Configuration Indicator, TCI) state associated with each reference signal among the multiple reference signals;
(2) the multiple reference signals;
(3) a first target high-layer signaling; and
(4) a predetermined rule.

Optionally, the first target high-layer signaling may include at least one of the following:

(1) a first high-layer signaling for indicating a spatial domain information reference signal;
(2) a second high-layer signaling for indicating a frequency domain information reference signal; and
(3) a third high-layer signaling for indicating a time domain information reference signal.

In a specific application, the first high-layer signaling, the second high-layer signaling and the third high-layer signaling may be different signaling or may be the same signaling.

In a possible implementation, the first target high-layer signaling may be associated with a CSI report configuration (CSI-ReportConfig), and the first target high-layer signaling is configured in one of the following:

(1) CSI resource set information element (Information element, IE).

For example, in a non-zero power channel state information resource set (Non-Zero Power CSI-RS Resource-Set, NZP-CSI-RS-ResourceSet), a space division reference resource (Space Division Reference Resource, SD-Reference Resource) domain and a frequency division reference resource (Frequency Division Reference Resource, FD-Reference Resource) domain are configured, or a space division-frequency division reference resource (SD-FDReferenceResource) domain is configured, containing a CSI-RS ID, used for indicating a corresponding spatial domain information and/or frequency domain information reference signal.

For example, multiple non-zero power channel state information resource (Non-Zero Power CSI-RS Resource, NZP-CSI-RS-Resource) groups are configured in the NZP-CSI-RS-ResourceSet, and the terminal may assume that each NZP-CSI-RS-Resource group has the same spatial domain information reference signal and/or frequency domain information reference signal.

(2) CSI resource information element.

For example, in the NZP-CSI-RS-Resource, a space division reference resource information (SD-ReferenceResource informal, SD-ReferenceResourceInfo) domain and a frequency division reference resource information (FD-ReferenceResourceInfo) domain are configured, or a space division-frequency division reference resource information (SD-FD-ReferenceResourceInfo) domain is configured, containing an enumeration value, for example, true/false (true/false), used for indicating whether the resource is a spatial domain information and/or frequency domain information reference signal.

For example, in the NZP-CSI-RS-ResourceSet, an SD-ReferencePortGroup domain and an FD-ReferencePortGroup domain are configured, or an SD-FD-ReferencePortGroup domain is configured, containing a CSI-RS port group ID, used for indicating a corresponding spatial domain information and/or frequency domain information reference port group.

(3) Codebook configuration information element.

For example, in a codebook configuration (codebookConfig), an SD-ReferenceResource domain and an FD-ReferenceResource domain are configured, or an SD-FD-ReferenceResource domain is configured, containing a CSI-RS ID, used for indicating a corresponding spatial domain information and/or frequency domain information reference signal.

In a possible implementation, the predetermined rule may indicate at least one of the following:

(1) a spatial domain information reference signal;
(2) a frequency domain information reference signal; and
(3) a time domain information reference signal.

Optionally, the reference signal (i.e., at least one of the spatial domain information reference signal, the frequency domain information reference signal and time domain information reference signal) indicated by the predetermined rule may include one of the following:

(1) Reference signal corresponding to a minimum CSI-RS identifier among the multiple reference signals associated with the same TCI state.

For example, the multiple reference signals include multiple CSI-RSs, where the multiple CSI-RSs are associated with the same TCI state. Then at least one of the spatial domain information reference signal, the frequency domain information reference signal and the time domain information reference signal may be a reference signal having a minimum CSI-RS identifier among the CSI-RS identifiers associated with the same TCI state.

The case that the multiple CSI-RSs are associated with the same TCI state may be that the TCI states associated with the multiple CSI-RSs have the same identifier.

(2) Reference signal corresponding to a minimum CSI-RS port group identifier among the multiple reference signals associated with the same TCI state.

For example, the multiple reference signals include multiple CSI-RS port groups, where the multiple CSI-RS port groups are associated with the same TCI state. Then at least one of the spatial domain information reference signal, the frequency domain information reference signal and the time domain information reference signal may be a reference signal having a minimum CSI-RS port group identifier among the CSI-RS port groups associated with the same TCI state.

(3) Reference signal corresponding to a CSI-RS port group having a minimum sum of port numbers associated with the CSI-RS port group among the multiple reference signals associated with the same TCI state.

For example, the multiple reference signals include multiple CSI-RSs, and one CSI-RS includes multiple CSI-RS port groups, where the multiple CSI-RS port groups are associated with the same TCI state. Then at least one of the spatial domain information reference signal, the frequency domain information reference signal and the time domain information reference signal may be a reference signal having a minimum sum of CSI-RS identifiers and CSI-RS port group identifiers among the multiple CSI-RSs associated with the same TCI state.

(4) Reference signal corresponding to a minimum CSI-RS identifier among the multiple reference signals including reference signals associated with the same quasi co-location (Quasi co-location, QCL) type.

For example, the multiple reference signals include multiple CSI-RSs, where the multiple CSI-RSs are associated with the same QCL type (for example, the associated QCL types are QCL type A). Then at least one of the spatial domain information reference signal, the frequency domain information reference signal and the time domain information reference signal may be a reference signal having a minimum CSI-RS identifier among the CSI-RS identifiers associated with the same QCL type.

(5) Reference signal corresponding to a minimum CSI-RS port group identifier among the multiple reference signals including reference signals associated with the same QCL type.

For example, the multiple reference signals include multiple CSI-RS port groups, where the multiple CSI-RS port groups are associated with the same QCL type. Then at least one of the spatial domain information reference signal, the frequency domain information reference signal and the time domain information reference signal may be a reference signal having a minimum CSI-RS port group identifier among the CSI-RS port groups associated with the same QCL type.

(6) Reference signal corresponding to a CSI-RS port group having a minimum sum of port numbers associated with the CSI-RS port group among the multiple reference signals including reference signals associated with the same QCL type.

For example, the multiple reference signals include multiple CSI-RSs, and one CSI-RS includes multiple CSI-RS port groups, where the multiple CSI-RS port groups are associated with the same QCL type. Then at least one of the spatial domain information reference signal, the frequency domain information reference signal and the time domain information reference signal may be a reference signal having a minimum sum of CSI-RS identifiers and CSI-RS port group identifiers among the multiple CSI-RSs associated with the same QCL type.

(7) Reference signal corresponding to a most recent CSI-RS measurement among the multiple reference signals including reference signals associated with the same QCL type.

For example, the multiple reference signals include multiple CSI-RSs, where the multiple CSI-RSs are associated with the same QCL type (for example, the associated QCL types are QCL type A). Then at least one of the spatial domain information reference signal, the frequency domain information reference signal and the time domain information reference signal may be a reference signal corresponding to a most recent CSI-RS measurement among the CSI-RSs associated with the same QCL type.

In the above implementation, the spatial domain information reference signal, the frequency domain information reference signal and the time domain information reference signal may be at least one reference information in the multiple reference signals respectively. The spatial domain information reference signal, the frequency domain information reference signal and the time domain information reference signal may be the same reference signal or different reference signals, which are not limited in embodiments of this application specifically.

In embodiments of this application, optionally, the target PMI parameter may include at least one of the following:

(1) spatial domain information, where the spatial domain information is indication information corresponding to a spatial domain beam in the PMI parameter, for example, information such as spatial domain beam group information, spatial domain orthogonal beam information, or spatial domain eigenvector quantization indication information;

(2) frequency domain information, where the frequency domain information is delay indication information corresponding to a delay domain in the PMI parameter, for example, information such as delay window indication information, delay window length indication information, delay position indication information, or strongest delay position indication information; and

(3) time domain information, where the time domain information is Doppler indication information corresponding to a time domain or a Doppler domain in the PMI parameter, for example, information such as Doppler spectrum information, Doppler position indication information, Doppler frequency domain indication information, or Doppler window indication information.

In other words, for spatial domain information, frequency domain information and time domain information corresponding to multiple target reference signals, the terminal may feed back a piece of spatial domain information, frequency domain information and time domain information. Thus, the feedback overheads of the PMI parameters can be minimized.

For example, when feeding back a PMI parameter for multi-TRP joint transmission, the terminal may first obtain a PMI parameter for joint transmission corresponding to each TRP. For example, the terminal may obtain at least one of the following:

(1) spatial domain information of indication information corresponding to a spatial domain beam in a PMI parameter for joint transmission;
(2) frequency domain information of delay indication information corresponding to a delay domain in a PMI parameter for joint transmission; and
(3) time domain information of Doppler indication information corresponding to a time domain or a Doppler domain in a PMI parameter for joint transmission.

Then it is determined whether a target PMI parameter is fed back for multiple TRPs thereamong.

Optionally, the operation that the terminal obtains PMI parameters may include at least one of the following:

a) the terminal obtains time domain information according to a transmission configuration indicator (Transmission Configuration Indicator, TCI) state associated with a reference signal;
b) the terminal obtains frequency domain information according to a TCI state associated with a reference resource;
c) the terminal obtains time domain information according to the TCI state associated with the reference resource;
d) the terminal obtains spatial domain information of each TRP according to the reference signal, and the terminal performs grouping feedback according to the obtained spatial domain information;
e) the terminal obtains frequency domain information of each TRP according to the reference signal, and the terminal performs grouping feedback according to the obtained frequency domain information;
f) the terminal obtains frequency domain information of each TRP according to the reference signal, and the terminal performs grouping feedback according to the obtained time domain information;
g) the terminal obtains a spatial domain information reference signal according to high-layer signaling 1 or a default rule, and then obtains spatial domain information;
h) the terminal obtains a frequency domain information reference signal according to high-layer signaling 2 or a default rule, and then obtains frequency domain information; and
i) the terminal obtains a time domain information reference signal according to high-layer signaling 3 or a default rule, and then obtains time domain information.

For example, the terminal may determine multiple target TRPs (i.e., TRPs associated with multiple target reference signals) having the same target PMI parameter according to the obtained spatial domain information, frequency domain information and time domain information, thereby determining one parameter value fed back for target PMI parameters corresponding to the multiple target reference signals (i.e., associated multiple target TRPs). Alternatively, the terminal may determine that multiple target TRPs have the same target PMI parameter in the process of obtaining the spatial domain information, the frequency domain information and the time domain information. Alternatively, target PMI parameters of multiple target TRPs have a certain relationship, and a parameter value of only one target PMI parameter may be fed back.

S212: The terminal transmits a PMI parameter for multi-TRP joint transmission, where for the target PMI parameters of multiple target TRPs associated with the multiple target reference signals, the terminal transmits one parameter value for the target PMI parameters.

In embodiments of this application, the terminal determines, according to target information, that only one target PMI parameter is fed back for multiple target reference signals among multiple reference signals (i.e., associated multiple TRPs). Then, when transmitting a PMI parameter for multi-TRP joint transmission, the terminal feeds back a parameter value of one target PMI for target PMI parameters corresponding to the multiple target reference signals, so that the PMI parameters may be fed back in a case of multi-TRP joint transmission, and the feedback overheads of the PMI parameters can be reduced.

In embodiments of this application, the multiple reference signals include at least one of the following: multiple channel state information reference signals (CSI-RS) and multiple CSI-RS port groups of one CSI-RS.

In a possible implementation, S210 of determining, by a terminal according to target information, that one parameter value is fed back for a target PMI parameter corresponding to multiple target reference signals among multiple reference signals includes: determining, by the terminal, that target PMI parameters corresponding to multiple first target CSI-RSs are identical according to TCI states associated with the multiple CSI-RSs, where TCI states associated with the multiple first target CSI-RSs are identical. In other words, in this possible implementation, when the reference signal is multiple CSI-RSs, CSI-RSs associated with the same TCI state among the multiple CSI-RSs have the same spatial domain information and/or frequency domain information and/or time domain information. The association with the same TCI state may be that the associated TCI states have the same identifier.

For example, four CSI-RSs (corresponding channel measurement resources are channel measurement resources (channel measurement resource, CMR) 0, CMR1, CMR2, and CMR3, respectively) are configured over the network for obtaining coherent cooperative transmission PMIs. If CMRO and CMR1 are associated with the same TCI state (TCI state0), CMR2 and CMR3 are associated with the same TCI state (TCI state1), the UE may assume that TRP0 associated with CMR0 and TRP1 associated with CMR1 have the same spatial domain beam and/or delay and/or Doppler shift, and TRP2 associated with CMR2 and TRP3 associated with CMR3 have the same spatial domain beam and/or delay and/or Doppler shift. Therefore, the UE only needs to obtain the coherent cooperative transmission PMIs according to the spatial domain beam and/or delay and/or Doppler shift corresponding to part of TRPs, and also only needs to feed back spatial domain information and/or frequency domain information and/or time domain information corresponding to part of the TRPs.

In another possible implementation, S210 may include: determining, by the terminal, that target PMI parameters corresponding to multiple second target CSI-RSs are identical according to CSI-RSs of a first predetermined quasi co-location (QCL) type indicated by TCI states associated with the multiple CSI-RSs, where CSI-RSs of the first predetermined QCL type indicated by TCI states associated with the multiple second target CSI-RSs are identical, and the first predetermined QCL type includes at least one of the following: QCL type A, QCL type B, QCL type C, and QCL type D.

Optionally, the terminal determines that at least one of spatial domain information, frequency domain information and time domain information corresponding to the multiple second target CSI-RSs is identical in a case that the first predetermined QCL type does not include QCL type D and CSI-RSs of QCL type A indicated by the TCI states associated with the multiple second target CSI-RSs are identical.

Parameters such as Doppler shift (Doppler shift), Doppler spread (Doppler spread), average delay (average delay), and delay spread (delay spread) may refer to the CSI-RS of QCL Type A. Therefore, in embodiments of this application, when the QCL of Type A is configured and QCL reference signals of Type A are identical, the UE may determine the same spatial domain information and/or time domain information and/or frequency domain information. Alternatively, the UE may determine the same time domain information and/or frequency domain information. Each CSI-RS independently selects spatial domain information. Alternatively, the UE may determine the same frequency domain information. Each CSI-RS independently selects spatial domain information and/or time domain information.

Optionally, the terminal determines that time domain information corresponding to the multiple second target CSI-RSs is identical in a case that the first predetermined QCL type does not include QCL type D and CSI-RSs of QCL type B indicated by the TCI states associated with the multiple second target CSI-RSs are identical.

Parameters such as Doppler shift (Doppler shift) and Doppler spread (Doppler spread) may refer to the CSI-RS of QCL Type B. Therefore, when the QCL of Type B is configured and QCL reference signals of Type B are identical, the UE may determine the same time domain information. Further, the UE may determine that each CSI-RS independently obtains the spatial domain information and the frequency domain information.

Optionally, the terminal determines that spatial domain information corresponding to the multiple second target CSI-RSs is identical in a case that the first predetermined QCL type includes QCL type D and CSI-RSs of QCL type D indicated by the TCI states associated with the multiple second target CSI-RSs are identical. Through this possible implementation, whether or not the spatial domain information is identical is controlled by whether or not Type D is identical, while the frequency domain information and/or the time domain information are obtained independently.

Optionally, the terminal determines that at least one of spatial domain information, frequency domain information and time domain information corresponding to the multiple second target CSI-RSs is identical in a case that the first predetermined QCL type includes QCL type D, CSI-RSs of QCL type D indicated by the TCI states associated with the multiple second target CSI-RSs are identical, and CSI-RSs of QCL type A indicated by the TCI states associated with the multiple second target CSI-RSs are identical. In other words, only when both Type A and Type D are identical, the frequency domain information is identical, while the spatial domain information and/or the time domain information are always independently obtained. Alternatively, only when both Type A and Type D are identical, the spatial domain information and/or the time domain information and/or the frequency domain information are identical.

For example, four CSI-RSs (CMRO, CMR1, CMR2, and CMR3) are configured over the network for obtaining coherent cooperative transmission PMIs. If QCL-Type A indicated by a TCI state (TCI state0) associated with CMR0 and QCL-Type A indicated by a TCI state (TCI state1) associated with CMR1 have the same reference signal (CSI-RS) and QCL-Type A indicated by a TCI state (TCI state2) associated with CMR2 and QCL-Type A indicated by a TCI state (TCI state3) associated with CMR3 have the same reference signal (CSI-RS), the UE may assume that TRP0 associated with CMR0 and TRP1 associated with CMR1 have the same spatial domain beam and/or delay and/or Doppler shift, and TRP2 associated with CMR2 and TRP3 associated with CMR3 have the same spatial domain beam and/or delay and/or Doppler shift. Therefore, the UE only needs to obtain the coherent cooperative transmission PMIs according to the spatial domain beam and/or delay and/or Doppler shift corresponding to part of TRPs, and also only needs to feed back spatial domain information and/or frequency domain information and/or time domain information corresponding to part of the TRPs.

In a possible implementation, S210 may include: determining, by the terminal, that target PMI parameters corresponding to multiple first target CSI-RS port groups are identical according to TCI states associated with the multiple CSI-RS port groups, where TCI states associated with the multiple first target CSI-RS ports are identical.

For example, one CSI-RS having four port groups (CMR port group 0, CMR port group 1, CMR port group 2, and CMR port group 3) is configured over the network for obtaining coherent cooperative transmission PMIs. If CMR port group 0 and CMR port group 1 are associated with the same TCI state (TCI state0), CMR port group 2 and CMR port group 3 are associated with the same TCI state (TCI state 1), the UE may assume that TRP0 associated with CMR port group 0 and TRP1 associated with CMR port group 1 have the same spatial domain beam and/or delay, and TRP2 associated with CMR port group 2 and TRP3 associated with CMR port group 3 have the same spatial domain beam and/or delay. Therefore, the UE only needs to obtain the coherent cooperative transmission PMIs according to the spatial domain beam and/or delay corresponding to part of TRPs, and also needs to feed back spatial domain information and/or frequency domain information corresponding to part of the TRPs.

In a possible implementation, the terminal determines that target PMI parameters corresponding to multiple second target CSI-RS port groups are identical according to CSI-RSs of a second predetermined QCL type indicated by TCI states associated with the multiple CSI-RS port groups, where CSI-RSs of the second predetermined QCL type indicated by TCI states associated with the multiple second target CSI-RS port groups are identical, and the second predetermined QCL type includes one of the following: QCL type A, QCL type B, QCL type C, and QCL type D.

Optionally, the terminal determines that at least one of spatial domain information, frequency domain information and time domain information corresponding to the multiple second target CSI-RS port groups is identical in a case that the second predetermined QCL type does not include QCL type D and CSI-RSs of QCL type A indicated by the TCI states associated with the multiple second target CSI-RS port groups are identical.

Alternatively, the terminal determines that time domain information corresponding to the multiple second target CSI-RS port groups is identical in a case that the second predetermined QCL type does not include QCL type D and CSI-RSs of QCL type B indicated by the TCI states associated with the multiple second target CSI-RS port groups are identical.

Alternatively, the terminal determines that spatial domain information corresponding to the multiple second target CSI-RS port groups is identical in a case that the second predetermined QCL type includes QCL type D and CSI-RSs of QCL type D indicated by the TCI states associated with the multiple second target CSI-RS port groups are identical.

Alternatively, the terminal determines that at least one of spatial domain information, frequency domain information and time domain information corresponding to the multiple second target CSI-RS port groups is identical in a case that the second predetermined QCL type includes QCL type D, CSI-RSs of QCL type D indicated by the TCI states associated with the multiple second target CSI-RS port groups are identical, and CSI-RSs of QCL type A indicated by the TCI states associated with the multiple second target CSI-RS port groups are identical.

In other words, if QCL Type D is not considered, it may be restricted that when Type A is configured and QCL reference resources of Type A are identical, the spatial domain information and/or the time domain information and/or the frequency domain information are identical. Alternatively, the time domain information and/or the frequency domain information are identical, and each CSI-RS independently selects the spatial domain information. Alternatively, the frequency domain information is identical, and each CSI-RS port group independently obtains the spatial domain information and/or the time domain information. When Type B is configured and QCL reference resources of Type B are identical, the time domain information is identical. Further, each CSI-RS port group independently obtains the spatial domain information and the frequency domain information at this moment.

If Type D is considered, whether or not the spatial domain information is identical may be controlled by whether or not Type D is identical, while the frequency domain information and/or the time domain information are obtained independently. Alternatively, only when both Type A and Type D are identical, the frequency domain information is identical, while the spatial domain information and/or the time domain information are always independently obtained. Alternatively, only when both Type A and Type D are identical, the spatial domain information and/or the time domain information and/or the frequency domain information are identical.

For example, one CSI-RS having four port groups (CMR port group 0, CMR port group 1, CMR port group 2, and CMR port group 3) is configured over the network for obtaining coherent cooperative transmission PMIs. If QCL-Type A indicated by a TCI state (TCI state0) associated with CMR port group 0 and QCL-Type A indicated by a TCI state (TCI state1) associated with CMR port group 1 have the same reference signal (CSI-RS) and QCL-Type A indicated by a TCI state (TCI state2) associated with CMR port group 2 and QCL-Type A indicated by a TCI state (TCI state3) associated with CMR port group 3 have the same reference signal (CSI-RS), the UE may assume that TRP0 associated with CMR port group 0 and TRP1 associated with CMR port group 1 have the same spatial domain beam and/or delay, and TRP2 associated with CMR port group 2 and TRP3 associated with CMR port group 3 have the same spatial domain beam and/or delay. Therefore, the UE only needs to obtain the coherent cooperative transmission PMIs according to the spatial domain beam and/or delay corresponding to part of TRPs, and also only needs to feed back spatial domain information and/or frequency domain information corresponding to part of the TRPs.

In a possible implementation, S210 may further include the following steps.

Step 1: The terminal obtains spatial domain information, frequency domain information and time domain information corresponding to each reference signal according to each reference signal.

For example, the terminal may perform measurement according to each reference signal to obtain corresponding channel information and then obtain spatial domain information, frequency domain information and time domain information corresponding to each reference signal using the obtained channel information.

Step 2: The terminal determines that the target PMI parameters corresponding to the multiple target reference signals are identical according to the spatial domain information, the frequency domain information and the time domain information corresponding to each reference signal.

In this step, the terminal may determine whether at least one of spatial domain information, frequency domain information and time domain information corresponding to part of the reference signals is identical according to the obtained spatial domain information, frequency domain information and time domain information corresponding to each of the reference signals. If the information is identical, only one target PMI parameter is fed back for at least one of the spatial domain information, the frequency domain information and the time domain information corresponding to these reference signals.

In a possible implementation, the terminal may feed back a PMI parameter for multi-TRP joint transmission in a grouping mode to save feedback overheads. Therefore, in this possible implementation, the operation of transmitting, by the terminal, a PMI parameter for multi-TRP joint transmission may include: dividing, by the terminal, the multiple TRPs into at least one TRP group or dividing the multiple reference signals into at least one reference signal group, and transmitting PMI parameters corresponding to each TRP group or reference signal group in groups, where the target PMI parameters corresponding to the TRPs in one TRP group are identical or the target PMI parameters corresponding to the reference signals in one reference signal group are identical. In other words, the terminal may divide TRPs or reference signals having the same target PMI parameter into a group, and feed back the PMI parameters in groups.

In a possible implementation, the terminal may feed back a PMI parameter for multi-TRP joint transmission in a grouping feedback mode to save feedback overheads. Therefore, in this possible implementation, the operation of transmitting, by the terminal, a PMI parameter for multi-TRP joint transmission may include: dividing, by the terminal, the multiple TRPs into at least one TRP group or dividing the multiple reference signals into at least one reference signal group according to network high-layer signaling display or implicit configuration, and transmitting PMI parameters corresponding to each TRP group or reference signal group in groups, where the target PMI parameters corresponding to the TRPs in one TRP group are identical or the target PMI parameters corresponding to the reference signals in one reference signal group are identical.

In a possible implementation, the operation of transmitting, by the terminal, PMI parameters of each TRP group in groups may include: mapping, by the terminal, the PMI parameters corresponding to each TRP group or reference signal group into a CSI for transmitting, where a first part of the CSI includes indication information about the number of the TRP groups or reference signal groups.

Optionally, the first part of the CSI may further include indication information about a grouping mode of the multiple TRPs or the multiple reference signals, or, the first part of the CSI includes indication information about a grouping mode of the multiple TRPs or the multiple reference signals.

In the above possible implementation, the UE may report the number of groups divided according to the spatial domain information/frequency domain information/time domain information of the reference resource, or a specific grouping mode, in part I of the corresponding CSI. For example, a CRI domain or an additional domain may be used for indicating the number of groups. Alternatively, the specific grouping mode may be reported in Part 2.

For example, one or more resource ID information is mapped before or after each beam/delay/Doppler feedback, or corresponding resources are indicated by a bitmap. At this moment, an upper bit of the bitmap corresponds to the configured first CSI-RS measurement resource or last CSI-RS measurement resource, and a lower bit of the bitmap corresponds to the configured last CSI-RS resource or first CSI-RS resource.

In a possible implementation, the operation that a terminal determines, according to target information, that one parameter value is fed back for a target PMI parameter corresponding to multiple target reference signals among multiple reference signals includes at least one of the following:

(1) The terminal determines, according to the first target high-layer signaling (for example, the first high-layer signaling) or the predetermined rule, that spatial domain information corresponding to the multiple reference signals refers to spatial domain information corresponding to a first reference signal and target spatial domain information is fed back jointly for reference signals referring to a same first reference signal and the same first reference signal, where the first reference signal is a spatial domain information reference signal indicated by the high-layer signaling or the predetermined rule, and the target spatial domain information is spatial domain information obtained according to the same first reference signal.

In other words, in this possible implementation, the terminal determines that the spatial domain information corresponding to the multiple reference signals is the same as the target spatial domain information corresponding to the spatial domain information reference signal, and only needs to feed back the target spatial domain information corresponding to the spatial domain information reference signal.

(2) The terminal determines, according to the first target high-layer signaling (for example, the second high-layer signaling) or the predetermined rule, that frequency domain information corresponding to the multiple reference signals refers to frequency domain information corresponding to a second reference signal and target frequency domain information is fed back for reference signals referring to a same second reference signal and the same second reference signal, where the second reference signal is a frequency domain information reference signal indicated by the high-layer signaling or the predetermined rule, and the target frequency domain information is frequency domain information obtained according to the same second reference signal.

In other words, in this possible implementation, the terminal determines that the frequency domain information corresponding to the multiple reference signals is the same as the target frequency domain information corresponding to the frequency domain information reference signal, and only needs to feed back the target frequency domain information corresponding to the spatial domain information reference signal.

(3) The terminal determines, according to the first target high-layer signaling (for example, the third high-layer signaling) or the predetermined rule, that time domain information corresponding to the multiple reference signals refers to time domain information corresponding to a third reference signal and target time domain information is fed back jointly for reference signals referring to a same third reference signal and the same third reference signal, where the third reference signal is a time domain information reference signal indicated by the high-layer signaling or the predetermined rule, and the target time domain information is time domain information obtained according to the same third reference signal.

In other words, in this possible implementation, the terminal determines that the time domain information corresponding to the multiple reference signals is the same as the target time domain information corresponding to the time domain information reference signal, and only needs to feed back the target time domain information corresponding to the time domain information reference signal.

Through the above possible implementation, only at least one of the target spatial domain information corresponding to the spatial domain information reference signal, the target frequency domain information corresponding to the frequency domain information reference signal, and the target time domain information corresponding to the time domain information reference signal may be fed back according to the indication of the high-layer signaling or the predetermined rule, so that the overhead of a PMI parameter for multi-TRP joint transmission can be saved, and the occupation of resources can be reduced.

In the above possible implementation, at least one of the spatial domain information reference signal, the frequency domain information reference signal and the time domain information reference signal is one CSI-RS or part of ports corresponding to one CSI-RS.

For example, four CSI-RSs (CMRO, CMR1, CMR2, and CMR3) are configured over the network for obtaining coherent cooperative transmission PMIs, and CMR0 corresponding to a spatial domain information reference signal is indicated through signaling configured in the NZP-CSI-RS-ResourceSet. The UE may assume that spatial domain beams of TRP1 associated with CMR1, TRP2 associated with CMR2 and TRP3 associated with CMR3 refer to a spatial domain beam of TRP0 associated with CMR0. Therefore, the UE only needs to obtain the spatial domain beam of TRP0, uses the spatial domain beam of TRP0 to obtain spatial domain beams of all TRPs to further obtain the coherent cooperative transmission PMIs, and also only needs to feed back the spatial domain beam of the spatial domain information reference signal.

For example, four CSI-RSs (CMRO, CMR1, CMR2, and CMR3) are configured over the network for obtaining coherent cooperative transmission PMIs, and two CMR groups are indicated through signaling configured in the NZP-CSI-RS-ResourceSet, where the first group includes CMR0 and CMR1, and the second group includes CMR2 and CMR3. The UE may assume that one CMR of CMR0 and CMR1 is a spatial domain information reference signal, and one CMR of CMR2 and CMR3 is a spatial domain information reference signal. The UE may also assume that TRP0 associated with CMR0 and TRP1 associated with CMR1 have the same spatial domain beam and TRP2 associated with CMR2 and TRP3 associated with CMR3 have the same spatial domain beam. Therefore, the UE only needs to obtain the spatial domain beam of the spatial domain information reference signal, uses the spatial domain beam of the spatial domain information reference signal to obtain spatial domain beams of all TRPs to further obtain the coherent cooperative transmission PMIs, and also only needs to feed back the spatial domain beam of the spatial domain information reference signal.

For example, four CSI-RSs (CMRO, CMR1, CMR2, and CMR3) are configured over the network for obtaining coherent cooperative transmission PMIs, and CMR0 corresponding to a frequency domain information reference signal is indicated through signaling configured in the NZP-CSI-RS-ResourceSet. The UE may assume that delays of TRP1 associated with CMR1, TRP2 associated with CMR2 and TRP3 associated with CMR3 refer to a delay of TRP0 associated with CMR0. Therefore, the UE only needs to obtain the delay of TRP0, uses the delay of TRP0 to obtain delays of all TRPs to further obtain the coherent cooperative transmission PMIs, and also only needs to feed back the delay of the frequency domain information reference signal.

For example, four CSI-RSs (CMRO, CMR1, CMR2, and CMR3) are configured over the network for obtaining coherent cooperative transmission PMIs, and CMR0 corresponding to a time domain information reference signal is indicated through signaling configured in the NZP-CSI-RS-ResourceSet. The UE may assume that Doppler indicators of TRP1 associated with CMR1, TRP2 associated with CMR2 and TRP3 associated with CMR3 refer to a Doppler indicator of TRP0 associated with CMR0. Therefore, the UE only needs to obtain the Doppler indicator of TRP0, uses the Doppler indicator of TRP0 to obtain Doppler indicators of all TRPs to further obtain the coherent cooperative transmission PMIs, and also only needs to feed back the Doppler indicator of the time domain information reference signal.

In a possible implementation, at least one of the spatial domain information reference signal, the frequency domain information reference signal and the time domain information reference signal is multiple CSI-RSs or multiple port groups corresponding to one CSI-RS. The multiple CSI-RSs or the multiple port groups may be associated with reference resources of different TCI states/or QCL types.

In the above possible implementation, optionally, at least one of the following reference signals has the same predetermined information:

reference signals referring to the first reference signal and the first reference signal;
reference signals referring to the second reference signal and the second reference signal; and
reference signals referring to the third reference signal and the third reference signal.

The predetermined information includes at least one of the following: an associated TCI state and an associated QCL type.

In other words, when at least one of the spatial domain information reference signal, the frequency domain information reference signal and the time domain information reference signal is multiple, the terminal may determine that the spatial domain information, the frequency domain information and/or the time domain information of other reference signals may be the same as the spatial domain information, the frequency domain information and/or the time domain information of the spatial domain information reference signal, the frequency domain information reference signal and the time domain information reference signal associated with the same TCI state or QCL type.

For example, four CSI-RSs (CMRO, CMR1, CMR2, and CMR3) are configured over the network for obtaining coherent cooperative transmission PMIs, and spatial domain information reference signals are displayed or implicitly indicated as CMR0 and CMR2 through signaling configured in the NZP-CSI-RS-ResourceSet. The UE divides CMR0 and CMR1 having the same TCI state into one group according to the TCI state associated with each CMR and divides CMR2 and CMR3 having the same TCI state into one group. Then the UE may assume that a spatial domain beam of TRP1 associated with CMR1 refers to a spatial domain beam of TRP0 associated with CMR0 (to be specific, the spatial domain beam of TRP1 associated with CMR1 is the same as the spatial domain beam of TRP0 associated with CMR0) and a spatial domain beam of TRP3 associated with CMR3 refers to a spatial domain beam of TRP2 associated with CMR2, may further obtain the coherent cooperative transmission PMIs, and may also only need to feed back the spatial domain beam of the spatial domain information reference signal.

For example, four CSI-RSs (CMRO, CMR1, CMR2, and CMR3) are configured over the network for obtaining coherent cooperative transmission PMIs, and optional spatial domain information reference signal candidate sets are provided through signaling in the NZP-CSI-RS-ResourceSet. The UE selects a resource as a spatial domain information reference signal from each set according to a set indicator. Assuming that CMR0 and CMR2 are selected as spatial domain information reference signals, the UE divides CMR0 and CMR1 having the same TCI state into one group according to the TCI state associated with each CMR and divides CMR2 and CMR3 having the same TCI state into one group. Then the UE may assume that a spatial domain beam of TRP1 associated with CMR1 refers to a spatial domain beam of TRP0 associated with CMR0 (to be specific, the spatial domain beam of TRP1 associated with CMR1 is the same as the spatial domain beam of TRP0 associated with CMR0) and a spatial domain beam of TRP3 associated with CMR3 refers to a spatial domain beam of TRP2 associated with CMR2, may further obtain the coherent cooperative transmission PMIs, and may also only need to feed back the spatial domain beam of the spatial domain information reference signal.

In another possible implementation, the target information may further include: a second target high-layer signaling, where the second target high-layer signaling is used for indicating at least one of the following:

first offset information of spatial domain information;
second offset information of frequency domain information; and
third offset information of time domain information.

In other words, in a case that at least one of the spatial domain information reference signal, the frequency domain information reference signal and the time domain information reference signal is indicated by the first target high-layer signaling or the predetermined rule, at least one of the first offset information of the spatial domain information, the second offset information of the frequency domain information and the third offset information of the time domain information may be indicated by the second target high-layer signaling. In this implementation, in a case that PMI parameters corresponding to other reference signals are different from the PMI parameters corresponding to at least one of the spatial domain information reference signal, the frequency domain information reference signal and the time domain information reference signal, the terminal may determine, according to the offset information, a spatial domain, frequency domain or time domain offset of the PMI parameters of each reference signal relative to the referred spatial domain information reference signal, the frequency domain information reference signal or the time domain information reference signal. Alternatively, in this implementation, the terminal may determine, according to the offset information and the spatial domain information of the corresponding spatial domain information reference signal, a spatial domain offset of the PMI parameters of each reference signal relative to the referred spatial domain information reference signal. Alternatively, in this implementation, the terminal may determine, according to the offset information and the frequency domain information of the corresponding frequency domain information reference signal, a frequency domain offset of the PMI parameters of each reference signal relative to the referred frequency domain information reference signal. Alternatively, in this implementation, the terminal may determine, according to the offset information and the time domain information of the corresponding time domain information reference signal, a time domain offset of the PMI parameters of each reference signal relative to the referred time domain information reference signal.

The second target high-layer signaling and the first target high-layer signaling may be the same high-layer signaling or may be different high-layer signaling, which is not limited in embodiments of this application specifically.

In a possible implementation, the first offset information includes one of the following:

(1) First offset of spatial domain information: The first offset is determined to indicate an optional offset of the spatial domain information of the target reference signal referring to the first reference signal relative to the first spatial domain information of the first reference signal. For example, multiple optional offsets may be indicated by the second target high-layer signaling, and the terminal may select one of the optional offsets as required.

(2) Number of first offsets of spatial domain information: The number of first offsets is used for indicating the optional offset of the spatial domain information of the target reference signal referring to the first reference signal relative to the first spatial domain information of the first reference signal.

For example, the number of optional offsets of the spatial domain information may be indicated by the second target high-layer signaling, and the terminal may obtain optional spatial domain information groups matching the number from the spatial domain beam set according to the number of optional offsets and the spatial domain information of the target reference signal, and select one group therefrom.

(3) First offset set of spatial domain information: The first offset set is used for indicating the optional offset of the spatial domain information of the target reference signal referring to the first reference signal relative to the first spatial domain information of the first reference signal.

For example, the first offset set of the spatial domain information may be indicated by the second target high-layer signaling. At least one optional offset set is indicated in the first offset set, and the terminal selects one optional offset set therefrom for feedback.

Optionally, in S212, the terminal may transmit first spatial domain information obtained according to a first reference signal indicated by the first target high-layer signaling and first target offset information of spatial domain information of a first other reference signal relative to the first spatial domain information, where the first target offset information is determined according to the first offset information, and the first other reference signal is a reference signal other than the first reference signal among the multiple reference signals.

In the above possible implementation, the terminal first obtains spatial domain information of a spatial domain information reference signal, obtains a candidate spatial domain information set according to the first offset, the number of first offsets or the first offset set, and selects spatial domain information corresponding to reference signals other than the spatial domain information reference signal from the candidate spatial domain information set.

For example, for codebook configurations N1=4, O1=4, N2=2, and O2=4 of one TRP, a corresponding spatial domain beam set is as shown in Table 6, where GiBj represents a $j^{th}$ beam of an $i^{th}$ orthogonal beam group.

Table 6

| G4 B2 | G8 B2 | G12 B2 | G16 B2 | G4 B4 | G8 B4 | G12 B4 | G16 B4 | G4 B6 | G8 B6 | G12 B6 | G16 B6 | G4 B2 | G8 B8 | G12 B8 | G16 B8 |
|---|---|---|---|---|---|---|---|---|---|---|---|---|---|---|---|
| G3 B2 | G7 B2 | G11 B2 | G15 B2 | G3 B4 | G7 B4 | G11 B4 | G15 B4 | G3 B6 | G7 B6 | G11 B6 | G15 B6 | G3 B2 | G7 B8 | G11 B8 | G15 B8 |
| G2 B2 | G6 B2 | G10 B2 | G14 B2 | G2 B4 | G6 B4 | G10 B4 | G14 B4 | G2 B6 | G6 B6 | G10 B6 | G14 B6 | G2 B2 | G6 B8 | G10 B8 | G14 B8 |
| G1 B2 | G5 B2 | G9 B2 | G13 B2 | G1 B4 | G5 B4 | G9 B4 | G13 B4 | G1 B6 | G5 B6 | G9 B6 | G13 B6 | G1 B2 | G5 B8 | G9 B8 | G13 B8 |

(continued)

| G4 B1 | G8 B1 | G12 B1 | G16 B1 | G4 B3 | G8 B3 | G12 B3 | G16 B3 | G4 B5 | G8 B5 | G12 B5 | G16 B5 | G4 B7 | G8 B7 | G12 B7 | G16 B7 |
|---|---|---|---|---|---|---|---|---|---|---|---|---|---|---|---|
| G3 B1 | G7 B1 | G11 B1 | G15 B1 | G3 B3 | G7 B3 | G11 B3 | G15 B3 | G3 B5 | G7 B5 | G11 B5 | G15 B5 | G3 B7 | G7 B7 | G11 B7 | G15 B7 |
| G2 B1 | G6 B1 | G10 B1 | G14 B1 | G2 B3 | G6 B3 | G10 B3 | G14 B3 | G2 B5 | G6 B5 | G10 B5 | G14 B5 | G2 B7 | G6 B7 | G10 B7 | G14 B7 |
| G1 B1 | G5 B1 | G9 B1 | G13 B1 | G1 B3 | G5 B3 | G9 B3 | G13 B3 | G1 B5 | G5 B5 | G9 B5 | G13 B5 | G1 B7 | G5 B7 | G9 B7 | G13 B7 |

If spatial domain information obtained by the terminal according to spatial domain information reference resources is four beams: G8B1, G8B2, G8B3, and G8B4, and the first offset is 1, a candidate spatial domain information set includes five orthogonal beam groups, where each group has four beams as follows, and a group of spatial domain information corresponding to reference signals other than the spatial domain information reference signal is selected from the five groups in Table 7.

Table 7

| Group 1 | Group 2 | Group 3 | Group 4 | Group 5 |
|---|---|---|---|---|
| G8B1, G8B2, G8B3, G8B4 | G4B1, G4B2, G4B3, G4B4 | G5B1, G5B2, G5B3, G5B4 | G7B1, G7B2, G7B3, G7B4 | G12B1, G12B2, G12B3, G12B4 |

If spatial domain information obtained by the terminal according to spatial domain information reference resources is four beams: G8B1, G8B2, G8B3, and G8B4, and the number of first offsets is 4, a candidate spatial domain information set includes four orthogonal beam groups, where each group has four beams as shown in Table 8 respectively, and a group of spatial domain information corresponding to reference signals other than the spatial domain information reference signal is selected from the four groups.

Table 8

| Group 1 | Group 2 | Group 3 | Group 4 |
|---|---|---|---|
| G8B1, G8B2, G8B3, G8B4 | G5B1, G5B2, G5B3, G5B4 | G12B1, G12B2, G12B3, G12B4 | G9B1, G9B2, G9B3, G9B4 |

In the above possible implementation, the terminal may feed back the spatial domain information reference signal to obtain a corresponding spatial domain beam set and an offset of the spatial domain beam set corresponding to other reference resources, and a feedback mapping order may follow the spatial domain information of the spatial domain information reference resources.

For example, the terminal feeds back spatial domain information i_1_1 obtained by CMR 0 corresponding to the spatial domain information reference signal to determine an orthogonal beam group G8 and i_1_2 to determine orthogonal beam groups B1/B2/B3/B4. For the spatial domain information of other CMRs, when the spatial domain information of CMR1 is group 2, it is only necessary to feed back an offset 001 of the group, where 000 represents group 1, 001 represents group 2, 010 represents group 3, 011 represents group 4, and 100 represents group 5.

Similar to the first offset information, the second offset information may include one of the following: a second offset of frequency domain information, the number of second offsets of frequency domain information, and a second offset set of frequency domain information. The second offset is used for determining an optional offset of frequency domain information of a target reference signal referring to the second reference signal relative to first frequency domain information of the second reference signal, and the number of second offsets and the second offset set are both used for indicating the optional offset of the frequency domain information of the target reference signal referring to the second reference signal relative to the first frequency domain information of the second reference signal.

Optionally, in S212, the terminal may transmit first frequency domain information obtained according to a second reference signal indicated by the first target high-layer signaling and second target offset information of frequency domain information of a second other reference signal relative to the first frequency domain information, where the second target offset information is determined according to the second offset information, and the second other reference signal is a reference signal other than the second reference signal among the multiple reference signals.

In this possible implementation, the terminal first obtains frequency domain information of a frequency domain information reference signal, obtains a candidate frequency domain information set according to the second offset information, and selects frequency domain information corresponding to reference signals other than the frequency domain information reference signal from the candidate frequency domain information set.

For example, for codebook configurations N3=13 and R=1, a corresponding delay set is: D1, D2, ..., D13, where Di represents an $i^{th}$ delay.

If delays obtained by the terminal according to the frequency domain information reference signal are D1, D2, D4, and D5, and the second offset is 1, a candidate frequency domain information set includes three delay groups, where each group has four delays as shown in Table 9 respectively, and a group of frequency domain information corresponding to reference signals other than the frequency domain information reference signal is selected from the three groups.

Table 9

| Group 1 | Group 2 | Group 3 |
|---|---|---|
| D1, D2, D4, D5 | D13, D1, D3, D4 | D2, D3, D5, D6 |

If delays obtained by the terminal according to frequency domain information reference resources are D1, D2, D4, and D5, and the number of second offsets is 2, a candidate frequency domain information set includes two delay groups, where each group has four delays as shown in Table 10 respectively, and a group of frequency domain information corresponding to reference signals other than the frequency domain information reference signal is selected from the two groups.

Table 10

| Group 1 | Group 2 |
|---|---|
| D1, D2, D4, D5 | D2, D3, D5, D6 |

It is to be noted that the first offset and the second offset may be one offset or may be different offsets. The number of first offsets and the number of second offsets may be one number or may be different numbers.

In S212, the terminal needs to feed back the frequency domain information reference signal to obtain a corresponding delay set and an offset corresponding to other reference resources, and a feedback mapping order may follow the frequency domain information of the frequency domain information reference signal.

In a possible implementation, for the frequency domain information of each reference signal or the frequency domain information reference signal, the frequency domain information corresponding to a strongest coefficient of the reference signal is mapped to a position where a delay is a predetermined value by cyclic shifting. The predetermined value may be 0. In other words, for the feedback of a delay set corresponding to each reference signal or the frequency domain information reference signal, the delay corresponding to the corresponding strongest coefficient may be mapped to the position of delay 0 by cyclic shifting. Through this possible implementation, by mapping the delay corresponding to the strongest coefficient to the position of delay 0, a frequency domain information indicator may not indicate delay 0, thereby further reducing the feedback overheads.

The strongest coefficient may refer to a coefficient having the strongest amplitude or capability among the multiple reference signals.

In the above possible implementation, during the feedback of a non-zero coefficient indicator of the corresponding coefficient matrix (i.e., W2) of each reference signal, optionally, a sequence length of a non-zero coefficient indicator of the reference signal in the PMI parameter is: 2*L_i *M_v_ref, where L_i is the number of beams corresponding to the reference signal, and M_v_ref is the size of a frequency domain information set at rank v corresponding to the second reference signal. In other words, each reference signals feed back a non-zero coefficient indicator. A corresponding bit sequence length of the non-zero coefficient indicator is 2*L_i *M_v_ref, where L_i is the number of beams corresponding to reference resource i, and M_v_ref is the size of a delay set at rank v corresponding to a frequency domain information reference resource. The network side device obtains delay sets of other reference signals according to the feedback offset and the delay set of the frequency domain information reference signal.

In another possible implementation, the frequency domain information corresponding to a strongest coefficient in a coefficient matrix corresponding to the multiple reference signals may be mapped to a position where a delay is a predetermined value by cyclic shifting. In other words, the terminal obtains the strongest coefficient according to the coefficient matrix of the multiple reference signals, and maps the delay corresponding to the strongest coefficient to the position of delay 0 by cyclic shifting. Assuming that the amount of movement is an offset (offset), the delays of other reference signals also move by offset accordingly.

In the above possible implementation, during the feedback of a non-zero coefficient indicator of the corresponding coefficient matrix (i.e., W2), all reference signals may feed back one non-zero coefficient indicator or each reference signal may feed back one non-zero coefficient indicator. Optionally, a sequence length of a non-zero coefficient indicator corresponding to an $i^{th}$ reference signal among the multiple reference signals in the PMI parameter is: a bit sequence of $2*L\_i*max(M\_v\_i)$. Optionally, a sequence length of non-zero coefficient indicators corresponding to the multiple reference signals in the PMI parameter is: a bit sequence of $2*sum(L\_i)*max(M\_v\_i)$, where $L\_i$ is the number of beams corresponding to the $i^{th}$ reference signal i, $M\_v\_i$ is the size of a frequency domain information set at rank v corresponding to the $i^{th}$ reference signal i, max(.) represents a max operation, and sum(.) represent a sum operation. In other words, all reference signals feed back a bit sequence having a length of $2*sum(L\_i)*max(M\_v\_i)$, where $L\_i$ is the number of beams corresponding to reference resource i, $M\_v\_i$ is the size of a delay set at rank v corresponding to reference resource i, max(.) represents a max operation, and sum(.) represent a sum operation. Alternatively, each reference signal feeds back a bit sequence having a length of $2*L\_i*max(M\_v\_i)$, where $L\_i$ is the number of beams corresponding to reference resource i, $M\_v\_i$ is the size of a delay set at rank v corresponding to reference resource i, and max(.) represents a max operation. At this moment, a total length of a non-zero coefficient indicator sequence in the PMI parameter is $2*sum(L\_i)*max(M\_v\_i)$, where sum(.) represent a sum operation. The network side device obtains delay sets of all reference resources according to the feedback offset and the delay set of the frequency domain information reference resource.

In a possible implementation, similar to the first offset information, the third offset information includes one of the following: a third offset of time domain information, the number of third offsets of time domain information, and a third offset set of time domain information. The third offset is used for determining an optional offset of time domain information of a target reference signal referring to the third reference signal relative to first time domain information of the third reference signal, and the number of third offsets and the third offset set are both used for indicating the optional offset of the time domain information of the target reference signal referring to the third reference signal relative to the first time domain information of the third reference signal. Specifically, referring to relevant descriptions about the first offset information and the second offset information, details are not described herein again.

Optionally, in S212, the terminal may transmit first time domain information obtained according to a third reference signal indicated by the first target high-layer signaling and third target offset information of time domain information of a third other reference signal relative to the first time domain information, where the third target offset information is determined according to the third offset information, and the third other reference signal is a reference signal other than the third reference signal among the multiple reference signals.

In various possible implementations of embodiments of this application, optionally, in a case that the PMI parameter does not include time domain information, non-zero coefficient indicators in a coefficient matrix corresponding to the target reference signals having the same frequency domain information and spatial domain information are identical. Alternatively, in a case that the PMI parameter includes time domain information, non-zero coefficient indicators in a coefficient matrix corresponding to the target reference signals having the same frequency domain information, spatial domain information and time domain information are identical. In this case, multiple TRPs or the reference signals share a non-zero coefficient indicator, and it is not necessary for each TRP to feed back a separate non-zero coefficient indicator, so that the feedback overheads can be further reduced.

Optionally, a sequence length of the non-zero coefficient indicators in the coefficient matrix corresponding to the target reference signals having the same frequency domain information and spatial domain information is: $2*L*M\_v$, where L is the number of beams corresponding to one reference signal, and $M\_v$ is the size of a frequency domain information set at rank v corresponding to one reference signal. Alternatively, a sequence length of the non-zero coefficient indicators in the coefficient matrix corresponding to the target reference signals having the same frequency domain information, spatial domain information and time domain information is: $2*L*M\_v*T\_v$, where L is the number of beams corresponding to one reference signal, $M\_v$ is the size of a frequency domain information set at rank v corresponding to one reference signal, and $T\_v$ is the size of a time domain information set at rank v corresponding to one reference signal.

For example, when time domain information is not obtained, a non-zero coefficient indicator ($i_{1,7,l}$) of the corresponding coefficient matrix (W2) of reference resources having the same frequency domain information and spatial domain information may be identical. For layer l, the terminal only needs to feed back a shared non-zero coefficient indicator. Further, the sequence length of the non-zero coefficient indicator is $2*L*M\_v$, where L is the number of beams corresponding to one reference resource, and $M\_v$ is the size of a delay set at rank v corresponding to one reference resource.

Alternatively, when time domain information is obtained, a non-zero coefficient indicator ($i_{1,7,l}$) of the corresponding coefficient matrix (W2) of reference resources having the same time domain information, frequency domain information and spatial domain information may be identical. For layer l, the terminal only needs to feed back a shared non-zero coefficient indicator. Further, the sequence length of the non-zero coefficient indicator may be $2*L*M\_v*T\_v$, where L is the number of beams corresponding to one reference resource, $M\_v$ is the size of a delay set at rank v corresponding to one reference source, and $T\_v$ is the size of a Doppler set at rank v corresponding to one reference source.

In various possible implementations of embodiments of this application, optionally, in the PMI parameter transmitted by the terminal, at least one of the following overheads is determined by the number of reference signals of different predetermined information contained in a reference signal associated with a trigger state:

an overhead of a frequency domain basis indicator or an overhead of a delay set indicator;
an overhead of a spatial domain basis indicator or an overhead of a spatial domain beam set indicator; and
an overhead of a time domain basis indicator or an overhead of a Doppler set indicator.

The predetermined information includes at least one of the following: a TCI state, QCL type A, QCL type B, QCL type C, and QCL type D.

Optionally, the trigger state includes: a trigger state indicated in downlink control information (DCI), or a trigger state pre-configured at the network side.

For frequency domain information, an overhead of a frequency domain basis indicator (FD basis indicator) or a delay set indicator fed back by the terminal may be determined according to the number of different reference signals of QCL Type A included in a reference resource associated with the trigger state (trigger state) indicated in the DCI. For example, the overhead may be $N\_TypeA*log2(C\_(N3-1)^{(Mv-1)})$ or $log2(C\_(N\_TypeA*N3-1)^{(N\_TypeA*Mv-1)})$, where N_TypeA is the number of reference signals of QCL Type A, Mv is the number of frequency domain basis vectors selected at rank-v corresponding to each reference signal of Type A, and $C\_(N)^{(M)}$ represents a combination number in which M numbers are selected from N numbers.

Optionally, N_TypeA may also be defined as a maximum value of the number of different reference signals of Type A included in each set of multiple CSI-RS resource sets associated with all trigger states (i.e., pre-configured at the network side).

Through the technical solution provided by embodiments of this application, the terminal may indicate some sharable spatial domain information, frequency domain information or time domain information, thereby preventing the terminal from obtaining the spatial domain information, the frequency domain information and the time domain information for each TRP. Also, only a piece of the shared information needs to be fed back, thereby further reducing the feedback overheads in some scenarios.

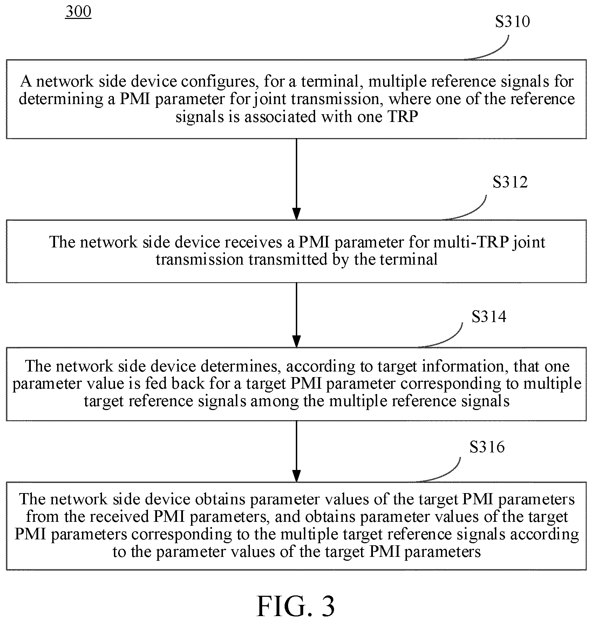

FIG. 3 shows a schematic flowchart of a PMI parameter obtaining method for multi-TRP joint transmission according to embodiments of this application. The method 300 may be performed by a network side device. In other words, the method may be performed by software or hardware installed on the network side device. As shown in FIG. 3, the method mainly includes the following steps.

S310: A network side device configures for a terminal multiple reference signals for determining a PMI parameter for joint transmission, where one of the reference signals is associated with one TRP.

The method 300 includes the steps executed by the network side device corresponding to the method 200, and has an implementation corresponding to the method 200. In embodiments of this application, some contents related to the network side device are mainly described, and other contents that are not described may be referred to in the description of the method 200, and will not be described herein again.

S312: The network side device receives a PMI parameter for multi-TRP joint transmission transmitted by the terminal.

The terminal may transmit a PMI parameter for multi-TRP joint transmission in the manner described in the method 200, with reference to the description in the method 200.

S314: The network side device determines, according to target information, that one parameter value is fed back for a target PMI parameter corresponding to multiple target reference signals among the multiple reference signals.

Optionally, the target information includes one of the following:

(1) TCI state associated with the multiple reference signals.
For example, the network side device may determine whether the terminal feeds back only one target PMI parameter for some of the reference signals according to whether the configured TCI states associated with each of the reference signals are identical.
(2) First target high-layer signaling configured for the terminal.

For example, the network side device may indicate at least one of the spatial domain information reference signal, the frequency domain information reference signal and the time domain information reference signal among the multiple reference signals through the first target high-layer signaling, and indicate that the target PMI parameters of other reference signals of the terminal may refer to the target PMI parameters of the reference signals. Further, the network side device may determine the target PMI parameters of the terminal for the multiple reference signals, and feed back only the target PMI parameters corresponding to the indicated reference signals.

Optionally, the first target high-layer signaling includes at least one of the following:

a first high-layer signaling for indicating a spatial domain information reference signal;
a second high-layer signaling for indicating a frequency domain information reference signal; and
a third high-layer signaling for indicating a time domain information reference signal.

Optionally, the first target high-layer signaling is associated with a CSI report configuration, and the first target high-layer signaling is configured in one of the following:

a CSI resource set information element;
a CSI resource information element; and
a codebook configuration information element.

Details may refer to relevant descriptions in the method 200 and are not described herein again.

(3) Predetermined rule.

Optionally, the predetermined rule indicates at least one of the following:

a spatial domain information reference signal;
a frequency domain information reference signal; and
a time domain information reference signal.

For example, the predetermined rule may determine which reference signals are spatial domain information reference signals, which reference signals are frequency domain information reference signals, and which reference signals are time domain information reference signals among the multiple reference signals configured by the network side device for the terminal.

For example, the predetermined rule may be at least one of the following:

1, a resource having a minimum CSI-RS ID or CSI-RS port group ID in reference signals associated with the same TCI state among the reference signals, or a CSI-RS port group having a minimum sum of port numbers associated with the CSI-RS port group;
2, a resource having a minimum CSI-RS ID or CSI-RS port group ID in reference signals associated with the same QCL reference signal among the reference signals, or a CSI-RS port group having a minimum sum of port numbers associated with the CSI-RS port group; and
3, a CSI-RS corresponding to recent measurement among CSI-RSs associated with the same QCL reference signal among the reference signals.

S316: The network side device obtains parameter values of the target PMI parameters from the received PMI parameters, and obtains parameter values of the target PMI parameters corresponding to the multiple target reference signals according to the parameter values of the target PMI parameters.

The network side device may recover parameter values of target PMI parameters corresponding to the multiple target reference signals according to the received PMI parameters, thereby obtaining a PMI parameter for multi-TRP joint transmission.

In a possible implementation, the operation that the network side device determines, according to target information, a target PMI parameter fed back by the terminal for multiple target reference signals among the multiple reference signals may include at least one of the following:

(1) The network side device determines, according to the first target high-layer signaling or the predetermined rule, that spatial domain information corresponding to the multiple reference signals refers to spatial domain information corresponding to a first reference signal in a case that the PMI parameters are fed back by the terminal and target spatial domain information is fed back jointly for reference signals referring to a same first reference signal and the same first reference signal, where the first reference signal is a spatial domain information reference signal indicated by the high-layer signaling or the predetermined rule, and the target spatial domain information is spatial domain information obtained according to the same first reference signal.
(2) The network side device determines, according to the first target high-layer signaling or the predetermined rule, that frequency domain information corresponding to the multiple reference signals refers to frequency domain information corresponding to a second reference signal in a case that the PMI parameters are fed back by the terminal and target frequency domain information is fed back jointly for reference signals referring to a same second reference signal and the same second reference signal, where the second reference signal is a frequency domain information reference signal indicated by the high-layer signaling or the predetermined rule, and the target frequency domain information is frequency domain information obtained according to the same second reference signal.

(3) The network side device determines, according to the first target high-layer signaling or the predetermined rule, that time domain information corresponding to the multiple reference signals refers to time domain information corresponding to a third reference signal in a case that the PMI parameters are fed back by the terminal and target time domain information is fed back jointly for reference signals referring to a same third reference signal and the same third reference signal, where the third reference signal is a time domain information reference signal indicated by the high-layer signaling or the predetermined rule, and the target time domain information is time domain information obtained according to the same third reference signal.

In a possible implementation, the target information further includes: a second target high-layer signaling configured for the terminal, where the second target high-layer signaling is used for indicating at least one of the following:

first offset information of spatial domain information;
second offset information of frequency domain information; and
third offset information of time domain information.

In a possible implementation, the operation of obtaining, by the network side device, parameter values of the target PMI parameters from the received PMI parameters, and obtaining parameter values of the target PMI parameters corresponding to the multiple target reference signals according to the parameter values of the target PMI parameters may include: obtaining, by the network side device, parameter values of the target PMI parameters and corresponding target offset information from the received PMI parameters, and obtaining parameter values of the target PMI parameters corresponding to the multiple target reference signals according to the parameter values of the target PMI parameters and the target offset information.

In embodiments of this application, in order to reduce the feedback overhead of a PMI parameter for multi-TRP joint transmission, embodiments of this application further provide another PMI parameter feedback method for multi-TRP joint transmission.

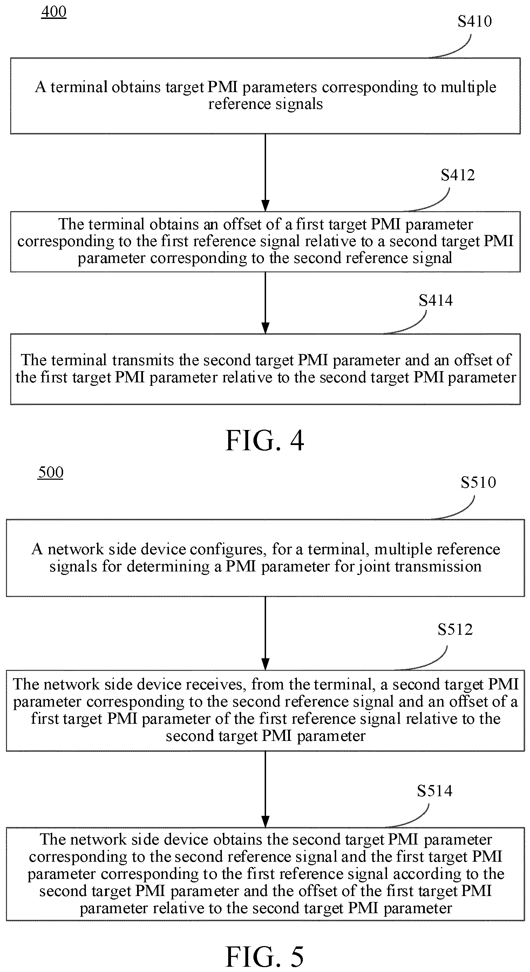

FIG. 4 shows another schematic flowchart of a PMI parameter feedback method for multi-TRP joint transmission according to embodiments of this application. The method 400 may be performed by a terminal. In other words, the method may be performed by software or hardware installed on the terminal. As shown in FIG. 4, the method mainly includes the following steps.

S410: A terminal obtains target PMI parameters corresponding to multiple reference signals.

The multiple reference signals are reference signals configured for determining a target PMI parameter for joint transmission, one of the reference signals is associated with one TRP, and the multiple reference signals include a first reference signal and a second reference signal.

For example, the terminal may measure multiple reference signals to obtain target PMI parameters corresponding to each reference signal.

Alternatively, the terminal may obtain target PMI parameters corresponding to each reference signal in the mode described in the method 200. For example, the target PMI parameters corresponding to the reference signals having the same associated TCI state are identical, and the terminal may obtain the target PMI parameter of one of the reference signals. For example, the terminal may obtain a target PMI parameter corresponding to a PMI information reference signal (including at least one of the spatial domain information reference signal, the frequency domain information reference signal and the time domain information reference signal) indicated by the high-layer signaling or the predetermined rule, and use the target PMI parameter as the target PMI parameters of the multiple reference signals. For example, the terminal may obtain a target PMI parameter corresponding to a PMI information reference signal (including at least one of the spatial domain information reference signal, the frequency domain information reference signal and the time domain information reference signal) indicated by the high-layer signaling or the predetermined rule, and obtain target PMI parameters corresponding to other reference signals according to offset information (for example, at least one of the first offset information, the second offset information and the third offset information indicated by the second target high-layer signaling) indicated by the network side device.

S412: The terminal obtains an offset of a first target PMI parameter corresponding to the first reference signal relative to a second target PMI parameter corresponding to the second reference signal.

In embodiments of this application, the terminal may obtain, on the basis of a second target PMI parameter corresponding to the second reference signal, an offset of a first target PMI parameter corresponding to each of the other first reference signals relative to the second target PMI parameter.

For example, the second reference signal may be a PMI information reference signal (including at least one of the spatial domain information reference signal, the frequency domain information reference signal and time domain information reference signal) indicated by the first target high-layer signaling the predetermined rule. Alternatively, the second reference signal may be determined according to energy or strongest coefficients corresponding to the multiple reference signals.

For example, in a possible implementation, in a case that the number of the second reference signal is one, the second reference signal includes one of the following:

a reference signal having a strongest energy among the multiple reference signals; and
a reference signal having a strongest coefficient among the multiple reference signals.

The strongest coefficient may be a coefficient having the strongest amplitude or capability.

In the above possible implementation, a reference signal having the strongest energy or a reference signal having the strongest coefficient is used as the second reference signal, and the overhead of an offset of PMI parameters corresponding to other reference signals relative to a PMI parameter corresponding to the reference signal can be reduced to save resources.

In a possible implementation, in order to further reduce the overheads, before S412, the method may further include: dividing, by the terminal, the multiple reference signals into at least one reference signal group according to a high-layer signaling or a default rule, where target PMI parameters corresponding to reference signals in the same reference signal group are identical. For example, the network side device may indicate the grouping mode of the terminal by the high-layer signaling, or may indicate the grouping mode by the default rule.

In the above possible implementation, the at least one reference signal group includes a first reference signal group and a second reference signal group. The first reference signal group includes at least one said first reference signal, and the second reference signal group includes at least one said second reference signal. Optionally, S412 may include: obtaining, by the terminal, an offset of a first target PMI parameter of the first reference signal group relative to a second target PMI parameter corresponding to the second reference signal group. There may be one or multiple first reference signal groups. The number may be specifically determined according to an actual application and is not limited in embodiments of this application.

In a possible implementation, in order to further reduce the overheads, the second reference signal group includes one of the following:

a reference signal group having a strongest energy among the at least one reference signal group; and
a reference signal group having a strongest coefficient among the at least one reference signal group.

In a possible implementation, the first target PMI parameter and the second target PMI parameter may independently include at least one of the following:

spatial domain information, where the spatial domain information is indication information corresponding to a spatial domain beam in the PMI parameter;
frequency domain information, where the frequency domain information is delay indication information corresponding to a delay domain in the PMI parameter; and
time domain information, where the time domain information is Doppler indication information corresponding to a time domain or a Doppler domain in the PMI parameter,
S414: The terminal transmits the second target PMI parameter and an offset of the first target PMI parameter relative to the second target PMI parameter.

Through the technical solution provided by embodiments of this application, by feeding back a first target PMI parameter corresponding to a second reference signal and an offset of first target PMI parameters corresponding to other reference signals relative to a second target PMI parameter, the overhead of a PMI parameter for multi-TRP joint transmission can be reduced.

FIG. 5 shows another schematic flowchart of a PMI parameter obtaining method for multi-TRP joint transmission according to embodiments of this application. The method 500 may be performed by a network side device. In other words, the method may be performed by software or hardware installed on the network side device. As shown in FIG. 5, the method mainly includes the following steps.

S510: A network side device configures, for a terminal, multiple reference signals for determining a PMI parameter for joint transmission.

One of the reference signals is associated with one TRP, and the multiple reference signals include a first reference signal and a second reference signal.

The method 500 includes the method steps executed by the network side device corresponding to the method 400, and has an implementation corresponding to the method 400. The relevant contents may be referred to in the description of the method 400.

S512: The network side device receives, from the terminal, a second target PMI parameter corresponding to the second reference signal and an offset of a first target PMI parameter of the first reference signal relative to the second target PMI parameter.

The terminal may transmit the second target PMI parameter and the offset of each first target PMI parameter relative to the second target PMI parameter in the mode described in the method 400. Details may refer to the description in the method 400 and are not described herein again.

S514: The network side device obtains the second target PMI parameter corresponding to the second reference signal and the first target PMI parameter corresponding to the first reference signal according to the second target PMI parameter and the offset of the first target PMI parameter relative to the second target PMI parameter.

In a possible implementation, before the network side device receives, from the terminal, a second target PMI parameter and an offset of the first target PMI parameter relative to the second target PMI parameter, the method may further include: configuring, by the network side device, a high-layer signaling for the terminal, where the high-layer signaling indicates division of the multiple reference signals into at least one reference signal group, and target PMI parameters corresponding to reference signals in the same reference signal group are identical.

In a possible implementation, the at least one reference signal group includes a first reference signal group and a second reference signal group. The first reference signal group includes at least one said first reference signal, and the second reference signal group includes at least one said second reference signal. In S514, the network side device determines that a target PMI parameter of each second reference signal in the second reference signal group is the second target PMI parameter, and determines a first target PMI parameter of each first reference signal in each first reference signal group according to the second target PMI parameter and the offset.

Through the technical solution provided by embodiments of this application, the network side device may recover a target PMI corresponding to each reference signal according to a first target PMI parameter corresponding to a second reference signal and an offset of first target PMI parameters corresponding to other reference signals relative to a second target PMI parameter, which are fed back by the terminal, so that the overhead of a PMI parameter for multi-TRP joint transmission can be reduced.

The executing body of the PMI parameter feedback method for multi-TRP joint transmission according to embodiments of this application may be a PMI parameter feedback apparatus for multi-TRP joint transmission. In embodiments of this application, the PMI parameter feedback apparatus for multi-TRP joint transmission according to embodiments of this application is explained with an example where the PMI parameter feedback apparatus for multi-TRP joint transmission performs the PMI parameter feedback method for multi-TRP joint transmission.

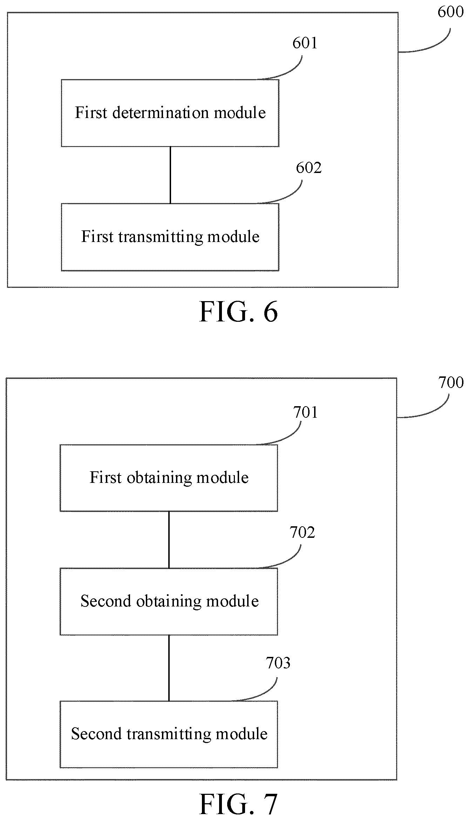

FIG. 6 shows a schematic structural diagram of a PMI parameter feedback apparatus for multi-TRP joint transmission according to embodiments of this application. As shown in FIG. 6, the apparatus 600 mainly includes: a first determination module 601 and a first transmitting module 602.

In embodiments of this application, the first determination module 601 is configured to determine, according to target information, that one parameter value is fed back for a target PMI parameter corresponding to multiple target reference signals among multiple reference signals, where the multiple reference signals are configured by a network side for determining a PMI parameter for joint transmission, and one of the reference signals is associated with one TRP. The first transmitting module 602 is configured to transmit a PMI parameter for multi-TRP joint transmission, where for the target PMI parameters of multiple target TRPs associated with the multiple target reference signals, the terminal transmits one parameter value for the target PMI parameters.

In a possible implementation, the target PMI parameter includes at least one of the following:

spatial domain information, where the spatial domain information is indication information corresponding to a spatial domain beam in the PMI parameter;

frequency domain information, where the frequency domain information is delay indication information corresponding to a delay domain in the PMI parameter; and

time domain information, where the time domain information is Doppler indication information corresponding to a time domain or a Doppler domain in the PMI parameter.

In a possible implementation, the target information includes one of the following:

a transmission configuration indicator (TCI) state associated with the multiple reference signals;

the multiple reference signals;

a first target high-layer signaling; and

a predetermined rule.

In a possible implementation, the multiple reference signals include one of the following: multiple channel state information reference signals (CSI-RS) and multiple CSI-RS port groups of one CSI-RS.

The operation of determining, by the first determination module 601 according to target information, that a same target PMI parameter is fed back for multiple target reference signals among multiple reference signals includes one of the following:

determining that target PMI parameters corresponding to multiple first target CSI-RSs are identical according to TCI states associated with the multiple CSI-RSs, where TCI states associated with the multiple first target CSI-RSs are identical;

determining that target PMI parameters corresponding to multiple second target CSI-RSs are identical according to CSI-RSs of a first predetermined quasi co-location (QCL) type indicated by TCI states associated with the multiple CSI-RSs, where CSI-RSs of the first predetermined QCL type indicated by TCI states associated with the multiple second target CSI-RSs are identical, and the first predetermined QCL type includes at least one of the following: QCL type A, QCL type B, QCL type C, and QCL type D;

determining that target PMI parameters corresponding to multiple first target CSI-RS port groups are identical according to TCI states associated with the multiple CSI-RS port groups, where TCI states associated with the multiple first target CSI-RS ports are identical; and

determining that target PMI parameters corresponding to multiple second target CSI-RS port groups are identical according to CSI-RSs of a second predetermined QCL type indicated by TCI states associated with the multiple CSI-RS port groups, where CSI-RSs of the second predetermined QCL type indicated by TCI states associated with the multiple second target CSI-RS port groups are identical, and the second predetermined QCL type includes one of the following: QCL type A, QCL type B, QCL type C, and QCL type D.

In a possible implementation, the operation of determining, by the first determination module 601, that target PMI parameters corresponding to multiple second target CSI-RSs are identical includes one of the following:

determining that at least one of spatial domain information, frequency domain information and time domain information corresponding to the multiple second target CSI-RSs is identical in a case that the first predetermined QCL type does not include QCL type D and CSI-RSs of QCL type A indicated by the TCI states associated with the multiple second target CSI-RSs are identical;

determining that time domain information corresponding to the multiple second target CSI-RSs is identical in a case that the first predetermined QCL type does not include QCL type D and CSI-RSs of QCL type B indicated by the TCI states associated with the multiple second target CSI-RSs are identical;

determining that spatial domain information corresponding to the multiple second target CSI-RSs is identical in a case that the first predetermined QCL type includes QCL type D and CSI-RSs of QCL type D indicated by the TCI states associated with the multiple second target CSI-RSs are identical; and

determining that at least one of spatial domain information, frequency domain information and time domain information corresponding to the multiple second target CSI-RSs is identical in a case that the first predetermined QCL type includes QCL type D, CSI-RSs of QCL type D indicated by the TCI states associated with the multiple second target CSI-RSs are identical, and CSI-RSs of QCL type A indicated by the TCI states associated with the multiple second target CSI-RSs are identical.

In a possible implementation, the operation of determining, by the first determination module 601, that target PMI parameters corresponding to multiple second target CSI-RS port groups are identical includes one of the following:

determining, by the terminal, that at least one of spatial domain information, frequency domain information and time domain information corresponding to the multiple second target CSI-RS port groups is identical in a case that the second predetermined QCL type does not include QCL type D and CSI-RSs of QCL type A indicated by the TCI states associated with the multiple second target CSI-RS port groups are identical;

determining, by the terminal, that time domain information corresponding to the multiple second target CSI-RS port groups is identical in a case that the second predetermined QCL type does not include QCL type D and CSI-RSs of QCL type B indicated by the TCI states associated with the multiple second target CSI-RS port groups are identical;

determining, by the terminal, that spatial domain information corresponding to the multiple second target CSI-RS port groups is identical in a case that the second predetermined QCL type includes QCL type D and CSI-RSs of QCL type D indicated by the TCI states associated with the multiple second target CSI-RS port groups are identical; and

determining, by the terminal, that at least one of spatial domain information, frequency domain information and time domain information corresponding to the multiple second target CSI-RS port groups is identical in a case that the second predetermined QCL type includes QCL type D, CSI-RSs of QCL type D indicated by the TCI states associated with the multiple second target CSI-RS port groups are identical, and CSI-RSs of QCL type A indicated by the TCI states associated with the multiple second target CSI-RS port groups are identical.

In a possible implementation, the operation of determining, by the first determination module 601 according to target information, that a same target PMI parameter is fed back for multiple target reference signals among multiple reference signals includes:

obtaining spatial domain information, frequency domain information and time domain information corresponding to each reference signal according to each reference signal; and

determining that the target PMI parameters corresponding to the multiple target reference signals are identical according to the spatial domain information, the frequency domain information and the time domain information corresponding to each reference signal.

In a possible implementation, the operation of transmitting, by the first transmitting module 602, a PMI parameter for multi-TRP joint transmission includes:

dividing the multiple TRPs into at least one TRP group or dividing the multiple reference signals into at least one reference signal group, and transmitting PMI parameters corresponding to each TRP group or reference signal group in groups, where the target PMI parameters corresponding to the TRPs in one TRP group are identical or the target PMI parameters corresponding to the reference signals in one reference signal group are identical.

In a possible implementation, the operation of transmitting, by the first transmitting module 602, PMI parameters of each TRP group in groups includes:

mapping the PMI parameters corresponding to each TRP group or reference signal group into a CSI for transmitting, where a first part of the CSI includes indication information about the number of the TRP groups or reference signal groups.

In a possible implementation, the first part of the CSI further includes indication information about a grouping mode of the multiple TRPs or the multiple reference signals, or, the first part of the CSI includes indication information about a grouping mode of the multiple TRPs or the multiple reference signals.

In a possible implementation, the first target high-layer signaling includes at least one of the following:

a first high-layer signaling for indicating a spatial domain information reference signal;

a second high-layer signaling for indicating a frequency domain information reference signal; and

a third high-layer signaling for indicating a time domain information reference signal.

In a possible implementation, the first target high-layer signaling is associated with a CSI report configuration, and the first target high-layer signaling is configured in one of the following:

a CSI resource set information element;

a CSI resource information element; and

a codebook configuration information element.

In a possible implementation, the predetermined rule indicates at least one of the following:

a spatial domain information reference signal;

a frequency domain information reference signal; and

a time domain information reference signal.

In a possible implementation, the reference signal indicated by the predetermined rule includes one of the following:

a reference signal corresponding to a minimum CSI-RS identifier among the multiple reference signals associated with the same TCI state;

a reference signal corresponding to a minimum CSI-RS port group identifier among the multiple reference signals associated with the same TCI state;

a reference signal corresponding to a CSI-RS port group having a minimum sum of port numbers associated with the CSI-RS port group among the multiple reference signals associated with the same TCI state;

a reference signal corresponding to a minimum CSI-RS identifier among the multiple reference signals including reference signals associated with the same QCL type;

a reference signal corresponding to a minimum CSI-RS port group identifier among the multiple reference signals including reference signals associated with the same QCL type;

a reference signal corresponding to a CSI-RS port group having a minimum sum of port numbers associated with the CSI-RS port group among the multiple reference signals including reference signals associated with the same QCL type; and

a reference signal corresponding to a most recent CSI-RS measurement among the multiple reference signals including reference signals associated with the same QCL type.

In a possible implementation, the operation of determining, by the first determination module according to target information, that one parameter value is fed back for a target PMI parameter corresponding to multiple target reference signals among multiple reference signals includes at least one of the following:

determining, according to the first target high-layer signaling or the predetermined rule, that spatial domain information corresponding to the multiple reference signals refers to spatial domain information corresponding to a first reference signal and target spatial domain information is fed back jointly for reference signals referring to a same first reference signal and the same first reference signal, where the first reference signal is a spatial domain information reference signal indicated by the high-layer signaling or the predetermined rule, and the target spatial domain information is spatial domain information obtained according to the same first reference signal;

determining, according to the first target high-layer signaling or the predetermined rule, that frequency domain information corresponding to the multiple reference signals refers to frequency domain information corresponding to a second reference signal and target frequency domain information is fed back for reference signals referring to a same second reference signal and the same second reference signal, where the second reference signal is a frequency domain information reference signal indicated by the high-layer signaling or the predetermined rule, and the target frequency domain information is frequency domain information obtained according to the same second reference signal; and

determining, according to the first target high-layer signaling or the predetermined rule, that time domain information corresponding to the multiple reference signals refers to time domain information corresponding to a third reference signal and target time domain information is fed back jointly for reference signals referring to a same third reference signal and the same third reference signal, where the third reference signal is a time domain information reference signal indicated by the high-layer signaling or the predetermined rule, and the target time domain information is time domain information obtained according to the same third reference signal.

In a possible implementation, at least one of the following reference signals is one CSI-RS or part of ports corresponding to one CSI-RS:

the spatial domain information reference signal;
the frequency domain information reference signal; and
the time domain information reference signal.

In a possible implementation, at least one of the following reference signals is multiple CSI-RSs or multiple port groups corresponding to one CSI-RS:

the spatial domain information reference signal;
the frequency domain information reference signal; and
the time domain information reference signal.

In a possible implementation, at least one of the following reference signals has the same predetermined information:

reference signals referring to the first reference signal and the first reference signal;
reference signals referring to the second reference signal and the second reference signal; and
reference signals referring to the third reference signal and the third reference signal,
where the predetermined information includes at least one of the following: an associated TCI state and an associated QCL type.

In a possible implementation, the target information further includes: a second target high-layer signaling, where the second target high-layer signaling is used for indicating at least one of the following:

first offset information of spatial domain information;
second offset information of frequency domain information; and
third offset information of time domain information.

In a possible implementation, the first offset information includes one of the following: a first offset of spatial domain information, the number of first offsets of spatial domain information, and a first offset set of spatial domain information, where the first offset is determined to indicate an optional offset of spatial domain information of a target reference signal referring to the first reference signal relative to first spatial domain information of the first reference signal, and the number of first offsets and the first offset set are both used for indicating the optional offset of the spatial domain information of the target reference signal referring to the first reference signal relative to the first spatial domain information of the first reference signal.

The second offset information includes one of the following: a second offset of frequency domain information, the number of second offsets of frequency domain information, and a second offset set of frequency domain information. The second offset is used for determining an optional offset of frequency domain information of a target reference signal referring to the second reference signal relative to first frequency domain information of the second reference signal, and the number of second offsets and the second offset set are both used for indicating the optional offset of the frequency domain information of the target reference signal referring to the second reference signal relative to the first frequency domain information of the second reference signal.

The third offset information includes one of the following: a third offset of time domain information, the number of third offsets of time domain information, and a third offset set of time domain information. The third offset is used for determining an optional offset of time domain information of a target reference signal referring to the third reference signal relative to first time domain information of the third reference signal, and the number of third offsets and the third offset set are both used for indicating the optional offset of the time domain information of the target reference signal referring to the third reference signal relative to the first time domain information of the third reference signal.

In a possible implementation, the operation of transmitting, by the first transmitting module 602, a PMI parameter for multi-TRP joint transmission includes at least one of the following:

transmitting first spatial domain information obtained according to a first reference signal indicated by the first target high-layer signaling and first target offset information of spatial domain information of a first other reference signal relative to the first spatial domain information, where the first target offset information is determined according to the first offset information, and the first other reference signal is a reference signal other than the first reference signal among the multiple reference signals;

transmitting first frequency domain information obtained according to a second reference signal indicated by the first target high-layer signaling and second target offset information of frequency domain information of a second other reference signal relative to the first frequency domain information, where the second target offset information is determined according to the second offset information, and the second other reference signal is a reference signal other than the second reference signal among the multiple reference signals; and

transmitting first time domain information obtained according to a third reference signal indicated by the first target high-layer signaling and third target offset information of time domain information of a third other reference signal relative to the first time domain information, where the third target offset information is determined according to the third offset information, and the third other reference signal is a reference signal other than the third reference signal among the multiple reference signals.

In a possible implementation, the first transmitting module 602 is further configured to map, for the frequency domain information of each reference signal, the frequency domain information corresponding to a strongest coefficient of the reference signal to a position where a delay is a predetermined value by cyclic shifting.

In a possible implementation, for each reference signal, a sequence length of a non-zero coefficient indicator of the reference signal in the PMI parameter is: $2*L\_i*M\_v\_ref$, where $L\_i$ is the number of beams corresponding to the reference signal, and $M\_v\_ref$ is the size of a frequency domain information set at rank v corresponding to the second reference signal.

In a possible implementation, the first transmitting module 602 is further configured to map the frequency domain information corresponding to a strongest coefficient in the multiple reference signals to a position where a delay is a predetermined value by cyclic shifting.

In a possible implementation, a sequence length of a non-zero coefficient indicator corresponding to an $i^{th}$ reference signal among the multiple reference signals in the PMI parameter is: a bit sequence of $2*L\_i*max(M\_v\_i)$, where $L\_i$ is the number of beams corresponding to the $i^{th}$ reference signal i, $M\_v\_i$ is the size of a frequency domain information set at rank v corresponding to the $i^{th}$ reference signal i, and max(.) represents a max operation.

In a possible implementation, in a case that the PMI parameter does not include time domain information, non-zero coefficient indicators in a coefficient matrix corresponding to the target reference signals having the same frequency domain information and spatial domain information are identical. Or,

in a case that the PMI parameter includes time domain information, non-zero coefficient indicators in a coefficient matrix corresponding to the target reference signals having the same frequency domain information, spatial domain information and time domain information are identical.

In a possible implementation, a sequence length of the non-zero coefficient indicators in the coefficient matrix corresponding to the target reference signals having the same frequency domain information and spatial domain information is: $2*L*M\_v$, where L is the number of beams corresponding to one reference signal, and $M\_v$ is the size of a frequency domain information set at rank v corresponding to one reference signal. Or,

a sequence length of the non-zero coefficient indicators in the coefficient matrix corresponding to the target reference signals having the same frequency domain information, spatial domain information and time domain information is: $2*L*M\_v*T\_v$, where L is the number of beams corresponding to one reference signal, $M\_v$ is the size of a frequency domain information set at rank v corresponding to one reference signal, and $T\_v$ is the size of a time domain information set at rank v corresponding to one reference signal.

In a possible implementation, in the PMI parameter transmitted by the first transmitting module 602, at least one of the following overheads is determined by the number of reference signals of different predetermined information contained in a reference signal associated with a trigger state:

an overhead of a frequency domain basis indicator or an overhead of a delay set indicator;
an overhead of a spatial domain basis indicator or an overhead of a spatial domain beam set indicator; and
an overhead of a time domain basis indicator or an overhead of a Doppler set indicator.

The predetermined information includes at least one of the following: a TCI state, QCL type A, QCL type B, QCL type C, and QCL type D.

In a possible implementation, the trigger state includes: a trigger state indicated in downlink control information (DCI), or a trigger state pre-configured at the network side.

FIG. 7 shows another schematic structural diagram of a PMI parameter feedback apparatus for multi-TRP joint transmission according to embodiments of this application. As shown in FIG. 7, the apparatus 700 mainly includes: a first obtaining module 701, a second obtaining module 702 and a second transmitting module 703.

In embodiments of this application, the first obtaining module 701 is configured to obtain target PMI parameters corresponding to multiple reference signals, where the multiple reference signals are reference signals configured for determining a target PMI parameter for joint transmission, one of the reference signals is associated with one TRP, and the multiple reference signals include a first reference signal and a second reference signal. The second obtaining module 702 is configured to obtain an offset of a first target PMI parameter corresponding to the first reference signal relative to a second target PMI parameter corresponding to the second reference signal. The second transmitting module 703 is configured to transmit the second target PMI parameter and an offset of each first target PMI parameter relative to the second target PMI parameter.

In a possible implementation, in a case that the number of the second reference signal is one, the second reference signal includes one of the following:

a reference signal having a strongest energy among the multiple reference signals; and
a reference signal having a strongest coefficient among the multiple reference signals.

In a possible implementation, the second obtaining module 702 is further configured to divide the multiple reference signals into at least one reference signal group according to a high-layer signaling or a default rule, where target PMI parameters corresponding to reference signals in the same reference signal group are identical.

In a possible implementation, the at least one reference signal group includes a first reference signal group and a second reference signal group. The first reference signal group includes at least one said first reference signal, and the second reference signal group includes at least one said second reference signal. The operation of obtaining, by the second obtaining module 702, an offset of a first target PMI parameter corresponding to each first reference signal relative to a second target PMI parameter corresponding to the second reference signal includes:

obtaining an offset of a first target PMI parameter of the first reference signal group relative to a second target PMI parameter corresponding to the second reference signal group.

In a possible implementation, the second reference signal group includes one of the following:

a reference signal group having a strongest energy among the at least one reference signal group; and
a reference signal group having a strongest coefficient among the at least one reference signal group.

In a possible implementation, the target PMI parameter includes at least one of the following:

spatial domain information, where the spatial domain information is indication information corresponding to a spatial domain beam in the PMI parameter;
frequency domain information, where the frequency domain information is delay indication information corresponding to a delay domain in the PMI parameter; and

time domain information, where the time domain information is Doppler indication information corresponding to a time domain or a Doppler domain in the PMI parameter.

The PMI parameter feedback apparatus for multi-TRP joint transmission in embodiments of this application may be an electronic device such as an electronic device having an operating system, or may be a component in an electronic device such as an integrated circuit or a chip. The electronic device may be either a terminal or another device other than the terminal. Exemplarily, the terminal may include, but is not limited to, the type of the terminal 11 listed above, and the another device may be a server, a network attached storage (Network Attached Storage, NAS), or the like. Embodiments of this application are not specifically limited thereto.

The PMI parameter feedback apparatus for multi-TRP joint transmission according to embodiments of this application can implement various processes implemented by the terminal in the method embodiments shown in FIG. 2 to FIG. 5, and achieve the same technical effect. To avoid repetition, details are not described herein again.

The executing body of the PMI parameter obtaining method for multi-TRP joint transmission according to embodiments of this application may be a PMI parameter obtaining apparatus for multi-TRP joint transmission. In embodiments of this application, the PMI parameter obtaining apparatus for multi-TRP joint transmission according to embodiments of this application is explained with an example where the PMI parameter obtaining apparatus for multi-TRP joint transmission performs the PMI parameter obtaining method for multi-TRP joint transmission.

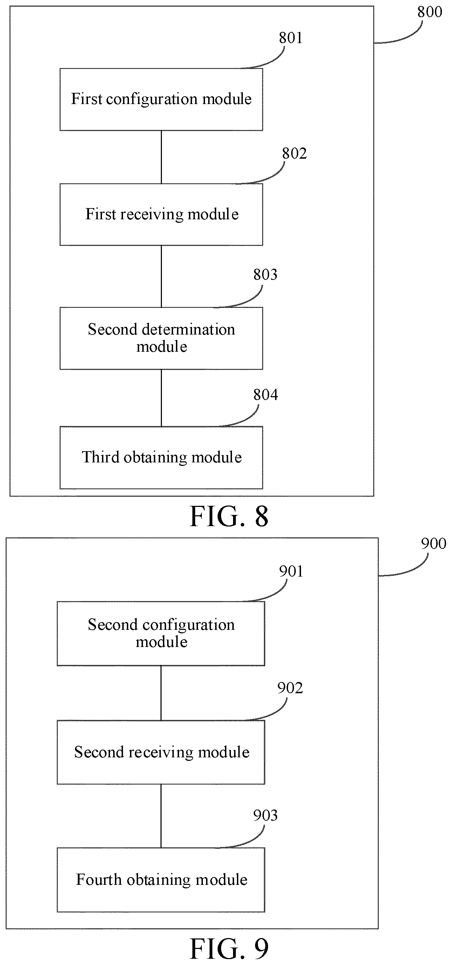

FIG. 8 shows a schematic structural diagram of a PMI parameter obtaining apparatus for multi-TRP joint transmission according to embodiments of this application. As shown in FIG. 8, the apparatus 800 mainly includes: a first configuration module 801, a first receiving module 802, a second determination module 803, and a third obtaining module 804.

In embodiments of this application, the first configuration module 801 is configured to configure for a terminal multiple reference signals for determining a PMI parameter for joint transmission, where one of the reference signals is associated with one TRP. The first receiving module 802 is configured to receive a PMI parameter for multi-TRP joint transmission transmitted by the terminal. The second determination module 803 is configured to determine, according to target information, a target PMI parameter fed back by the terminal for multiple target reference signals among the multiple reference signals. The third obtaining module 804 is configured to obtain parameter values of the target PMI parameters from the received PMI parameters, and obtain parameter values of the target PMI parameters corresponding to the multiple target reference signals according to the parameter values of the target PMI parameters.

In a possible implementation, the target information includes one of the following:

a TCI state associated with the multiple reference signals;
a first target high-layer signaling configured for the terminal; and
a predetermined rule.

In a possible implementation, the first target high-layer signaling includes at least one of the following:

a first high-layer signaling for indicating a spatial domain information reference signal;
a second high-layer signaling for indicating a frequency domain information reference signal; and
a third high-layer signaling for indicating a time domain information reference signal.

In a possible implementation, the first target high-layer signaling is associated with a CSI report configuration, and the first target high-layer signaling is configured in one of the following:

a CSI resource set information element;
a CSI resource information element; and
a codebook configuration information element.

In a possible implementation, the predetermined rule indicates at least one of the following:

a spatial domain information reference signal;
a frequency domain information reference signal; and
a time domain information reference signal.

In a possible implementation, the operation of determining, by the second determination module 803 according to target information, a target PMI parameter fed back by the terminal for multiple target reference signals among the multiple reference signals includes at least one of the following:

determining, according to the first target high-layer signaling or the predetermined rule, that spatial domain information corresponding to the multiple reference signals refers to spatial domain information corresponding to a first reference signal in a case that the PMI parameters are fed back by the terminal and target spatial domain information is fed back jointly for reference signals referring to a same first reference signal and the same first reference signal, where the first reference signal is a spatial domain information reference signal indicated by the high-layer signaling or the predetermined rule, and the target spatial domain information is spatial domain information obtained according to the same first reference signal;

determining, according to the first target high-layer signaling or the predetermined rule, that frequency domain information corresponding to the multiple reference signals refers to frequency domain information corresponding to a second reference signal in a case that the PMI parameters are fed back by the terminal and target frequency domain information is fed back jointly for reference signals referring to a same second reference signal and the same second reference signal, where the second reference signal is a frequency domain information reference signal indicated by the high-layer signaling or the predetermined rule, and the target frequency domain information is frequency domain information obtained according to the same second reference signal; and

determining, according to the first target high-layer signaling or the predetermined rule, that time domain information corresponding to the multiple reference signals refers to time domain information corresponding to a third reference signal in a case that the PMI parameters are fed back by the terminal and target time domain information is fed back jointly for reference signals referring to a same third reference signal and the same third reference signal, where the third reference signal is a time domain information reference signal indicated by the high-layer signaling or the predetermined rule, and the target time domain information is time domain information obtained according to the same third reference signal.

In a possible implementation, the target information further includes: a second target high-layer signaling configured for the terminal, where the second target high-layer signaling is used for indicating at least one of the following:

first offset information of spatial domain information;
second offset information of frequency domain information; and
third offset information of time domain information.

In a possible implementation, the operation of obtaining, by the third obtaining module 804, parameter values of the target PMI parameters from the received PMI parameters and obtaining parameter values of the target PMI parameters corresponding to the multiple target reference signals according to the parameter values of the target PMI parameters includes:

obtaining parameter values of the target PMI parameters and corresponding target offset information from the received PMI parameters, and obtaining parameter values of the target PMI parameters corresponding to the multiple target reference signals according to the parameter values of the target PMI parameters and the target offset information.

FIG. 9 shows another schematic structural diagram of a PMI parameter obtaining apparatus for multi-TRP joint transmission according to embodiments of this application. As shown in FIG. 9, the apparatus 900 mainly includes: a second configuration module 901, a second receiving module 902 and a fourth obtaining module 903.

In embodiments of this application, the second configuration module 901 is configured to configure for a terminal multiple reference signals for determining a PMI parameter for joint transmission, where one of the reference signals is associated with one TRP, and the multiple reference signals include a first reference signal and a second reference signal. The second receiving module 902 is configured to receive from the terminal a second target PMI parameter corresponding to the second reference signal and an offset of a first target PMI parameter of the first reference signal relative to the second target PMI parameter. The fourth obtaining module 903 is configured to obtain the second target PMI parameter corresponding to the second reference signal and the first target PMI parameter corresponding to the first reference signal according to the second target PMI parameter and the offset of the first target PMI parameter relative to the second target PMI parameter.

In a possible implementation, the second configuration module 901 is further configured to configure a high-layer signaling for the terminal, where the high-layer signaling indicates division of the multiple reference signals into at least one reference signal group, and target PMI parameters corresponding to reference signals in the same reference signal group are identical.

In a possible implementation, the at least one reference signal group includes a first reference signal group and a second reference signal group. The first reference signal group includes at least one said first reference signals, and the second reference signal group includes at least one said second reference signals. The operation of obtaining, by the fourth obtaining module 903, the second target PMI parameter corresponding to the second reference signal and the first target PMI parameter corresponding to the first reference signal according to the second target PMI parameter and the offset of the first target PMI parameter relative to the second target PMI parameter includes:

determining that a target PMI parameter of each second reference signal in the second reference signal group is the second target PMI parameter, and determining a first target PMI parameter of each first reference signal in each first reference signal group according to the second target PMI parameter and the offset.

The PMI parameter obtaining apparatus for multi-TRP joint transmission according to embodiments of this application can implement various processes implemented by the network side device in the method embodiments shown in FIG. 2 to FIG. 5, and achieve the same technical effect. To avoid repetition, details are not described herein again.

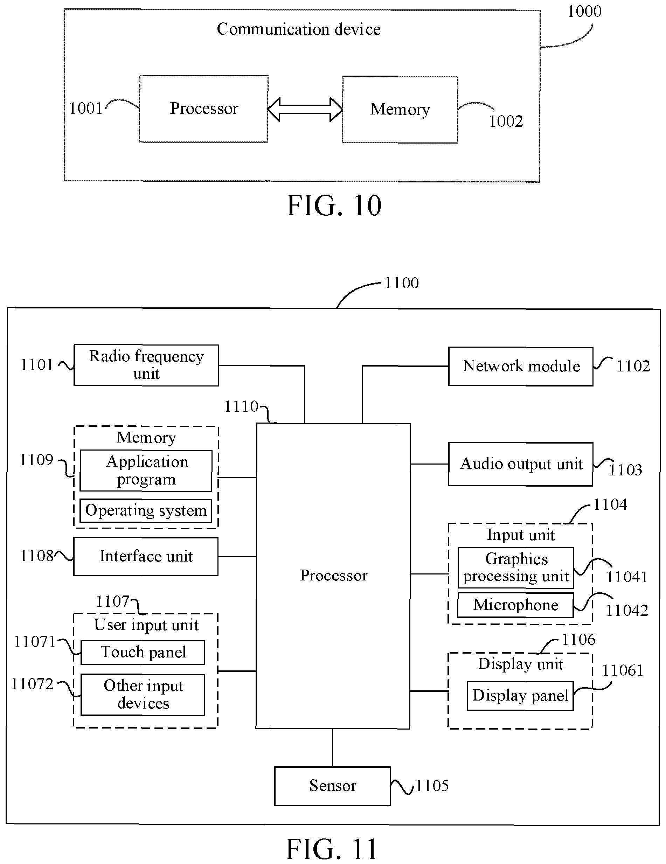

Optionally, as shown in FIG. 10, embodiments of this application further provide a communication device 1000, including a processor 1001 and a memory 1002. The memory 1002 stores programs or instructions executable on the processor 1001. For example, when the communication device 1000 is a terminal, the programs or instructions, when executed by the processor 1001, implement various steps of the embodiments of the PMI parameter feedback methods 200 and 400 for multi-TRP joint transmission, and can achieve the same technical effect. When the communication device 1000 is a network side device, the programs or instructions, when executed by the processor 1001, implement various steps of the embodiments of the PMI parameter obtaining methods 300 and 500 for multi-TRP joint transmission, and can achieve the same technical effect. To avoid repetition, details are not described herein again.

Embodiments of this application further provide a terminal, including a processor and a communication interface. The processor is configured to implement various steps of the embodiments of the PMI parameter feedback methods 200 and 400 for multi-TRP joint transmission. The communication interface is configured to communicate with an external device. The terminal embodiments correspond to the method embodiments at the terminal side. Various implementation processes and implementations of the method embodiments are applicable to the terminal embodiments and can achieve the same technical effect. Specifically, FIG. 11 is a schematic diagram of a hardware structure of a terminal implementing embodiments of this application.

The terminal 1100 includes, but is not limited to, at least some components of a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

It will be appreciated by those skilled in the art that the terminal 1100 may further include a power supply (for example, a battery) for supplying power to the components. The power supply may be logically connected to the processor 1110 by a power management system, thereby implementing functions such as charging, discharging, and power consumption management by using the power management system. The terminal structure shown in FIG. 11 does not constitute a limitation on the terminal, and the terminal may include more or fewer components than shown, or combine some components, or have different component arrangements. Details are not described herein again.

It will be appreciated that in embodiments of this application, the input unit 1104 may include a graphics processing unit (Graphics Processing Unit, GPU) 11041 and a microphone 11042. The GPU 11041 performs processing on image data of a static picture or a video that is obtained by an image acquisition apparatus (for example, a camera) in a video acquisition mode or an image acquisition mode. The display unit 1106 may include a display panel 11061. The display panel 11061 may be configured in a form of a liquid crystal display and an organic light-emitting diode. The user input unit 1107 includes at least one of a touch panel 11071 and another input device 11072. The touch panel 11071 is also referred to as a touch screen. The touch panel 11071 may include two parts: a touch detection apparatus and a touch controller. The another input device 11072 may include, but is not limited to, a physical keyboard, a functional key (for example, a volume control key or a switch key), a track ball, a mouse, and a joystick. Details are not described herein again.

In embodiments of this application, the radio frequency unit 1101 receives downlink data from a network side device and may then transmit the downlink data to the processor 1110 for processing. In addition, the radio frequency unit 1101 may transmit uplink data to the network side device. Generally, the radio frequency unit 1101 includes, but not limited to, an antenna, an amplifier, a transceiver, a coupler, a low noise amplifier, a duplexer, and the like.

The memory 1109 may be configured to store software programs or instructions and various data. The memory 1109 may mainly include a first storage area for storing programs or instructions and a second storage area for storing data. The first storage area may store an operating system, an application program or instruction required by at least one function (for example, a sound playback function and an image display function), and the like. Furthermore, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory may be a random access memory (Random Access Memory, RAM), a static random access memory (Static RAM, SRAM) a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in embodiments of this application includes, but is not limited to, these memories and any other suitable types of memories.

The processor 1110 may include one or more processing units. Optionally, the processor 1110 integrates an application processor and a modem processor, where the application processor mainly processes operations involving an operating system, a user interface, an application program, and the like, and the modem processor mainly processes wireless communication signals, for example, a baseband processor. It will be appreciated that the modem processor may also not be integrated into the processor 1110.

The processor 1110 is configured to determine, according to target information, that one parameter value is fed back for a target PMI parameter corresponding to multiple target reference signals among multiple reference signals, where the multiple reference signals are configured by a network side for determining a PMI parameter for joint transmission, and one of the reference signals is associated with one TRP. The radio frequency unit 1101 is configured to transmit a PMI parameter for multi-TRP joint transmission, where for the target PMI parameters of multiple target TRPs associated with the multiple target reference signals, the terminal transmits one parameter value for the target PMI parameters.

Alternatively, the processor 1110 is configured to: obtain target PMI parameters corresponding to multiple reference signals, where the multiple reference signals are reference signals configured for determining a target PMI parameter for joint transmission, one of the reference signals is associated with one TRP, and the multiple reference signals include a first reference signal and a second reference signal; and obtain an offset of a first target PMI parameter corresponding to the first reference signal relative to a second target PMI parameter corresponding to the second reference signal. The radio frequency unit 1101 is configured to transmit the second target PMI parameter and an offset of the first target PMI parameter relative to the second target PMI parameter.

Embodiments of this application further provide a network side device, including a processor and a communication interface. The processor is configured to implement various steps of the embodiments of the PMI parameter obtaining methods 300 and 500 for multi-TRP joint transmission. The communication interface is configured to communicate with an external device. The network side device embodiments correspond to the method embodiments at the network side device. Various implementation processes and implementations of the method embodiments are applicable to the network side device embodiments and can achieve the same technical effect.

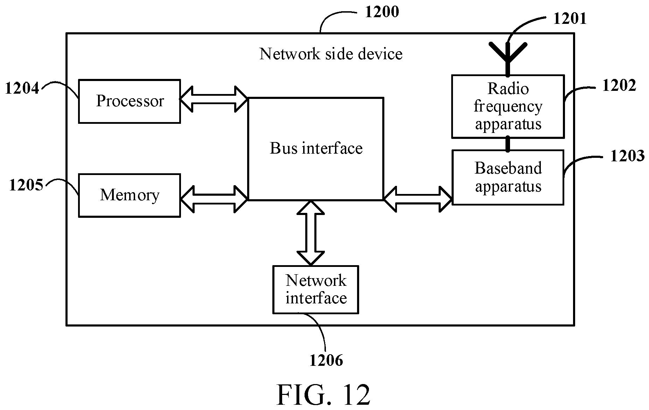

Specifically, embodiments of this application further provide a network side device. As shown in FIG. 12, the network side device 1200 includes: an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information through the antenna 1201 and transmits the received information to the baseband apparatus 1203 for processing. In a downlink direction, the baseband apparatus 1203 processes information to be transmitted and transmits the information to the radio frequency apparatus 1202. The received information is processed by the radio frequency apparatus 1202 and is then transmitted through the antenna 1201.

The method performed by the network side device in the above embodiments may be implemented in the baseband apparatus 1203. The baseband apparatus 1203 includes a baseband processor.

The baseband apparatus 1203 may, for example, include at least one baseband board. The baseband board is provided with multiple chips. As shown in FIG. 12, one of the chips is, for example, the baseband processor, connected to the memory 1205 through a bus interface to call programs in the memory 1205 to perform a network device operation shown in the above method embodiments.

The network side device may further include a network interface 1206. The interface is, for example, a common public radio interface (common public radio interface, CPRI).

Specifically, the network side device 1200 in embodiments of this application further includes: instructions or programs stored in the memory 1205 and executable on the processor 1204. The processor 1204 calls the instructions or programs in the memory 1205 to execute the method executed by each module in FIG. 8 or FIG. 9, and achieves the same technical effect. To avoid repetition, details are not described herein again.

Embodiments of this application further provide a readable storage medium. The readable storage medium stores programs or instructions. The programs or instructions, when executed by a processor, implement various processes of the embodiments of the PMI parameter feedback method for multi-TRP joint transmission or implement various processes of the embodiments of the PMI parameter obtaining method for multi-TRP joint transmission, and can achieve the same technical effect. To avoid repetition, details are not described herein again.

The processor is a processor in the terminal in the above embodiments. The readable storage medium includes a computer-readable storage medium such as a computer read-only memory (ROM), a random access memory (RAM), a magnetic disk, or an optical disc.

Embodiments of this application additionally provide a chip. The chip includes a processor and a communication interface. The communication interface is coupled to the processor. The processor is configured to execute programs or instructions, to implement various processes of the embodiments of the PMI parameter feedback method for multi-TRP joint transmission or implement various processes of the embodiments of the PMI parameter obtaining method for multi-TRP joint transmission, and can achieve the same technical effect. To avoid repetition, details are not described herein again.

It will be appreciated that the chip mentioned in embodiments of this application may also be referred to as a system on chip, a system chip, a system on a chip or a system-on-a-chip, etc.

Embodiments of this application additionally provide a computer program/program product. The computer program/program product is stored in a storage medium. The computer program/program product, when executed by at least one processor, implements various processes of the embodiments of the PMI parameter feedback method for multi-TRP joint transmission or implements various processes of the embodiments of the PMI parameter obtaining method for multi-TRP joint transmission and can achieve the same technical effect. To avoid repetition, details are not described herein again.

Embodiments of this application further provide a PMI parameter obtaining system for multi-TRP joint transmission, including: a terminal and a network side device, where the terminal may be configured to execute the steps of the PMI parameter feedback method 200 for multi-TRP joint transmission as described above, and the network side device may be configured to execute the steps of the PMI parameter obtaining method 300 for multi-TRP joint transmission as described above. Alternatively, the terminal may be configured to execute the steps of the PMI parameter feedback method 400 for multi-TRP joint transmission as described above, and the network side device may be configured to execute the steps of the PMI parameter obtaining method 500 for multi-TRP joint transmission as described above.

It is to be noted that the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such process, method, article, or apparatus. Without more limitations, elements defined by the sentence "including one" does not exclude that there are still other same elements in the processes, methods, objects, or apparatuses. Furthermore, it is to be pointed out that the scopes of the method and apparatus in the implementations of this application are not limited to executing functions according to the illustrated or discussed sequence, but may also include execute functions in a basically simultaneous way or in a reverse sequence based on the functions involved. For example, the described method may be executed according to a sequence different from the described sequence, and steps may further be added, omitted or combined. In addition, features described in some examples may also be combined in other examples.

According to the descriptions in the above implementations, a person skilled in the art may clearly learn that the method according to the above embodiments may be implemented by software plus a necessary hardware platform. Of course, it may also be implemented by hardware, but in many cases the former is better implementation. Based on such an understanding, the technical solutions of this application essentially, or the part contributing to the prior art, may be embodied in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the method described in each embodiment of this application.

Embodiments of this application have been described above with reference to the accompanying drawings. This application is, however, not limited to the specific implementations described above, and the specific implementations are merely exemplary rather than restrictive. A person of ordinary skill in the art may make various variations under the teaching of this application without departing from the spirit of this application and the protection scope of the claims, and such variations shall all fall within the protection scope of this application.

## Claims

1. A precoding matrix indicator (PMI) parameter feedback method for multi-transmission reception point (TRP) joint transmission, comprising:

    determining, by a terminal according to target information, that one parameter value is fed back for a target PMI parameter corresponding to multiple target reference signals among multiple reference signals, wherein the multiple reference signals are configured by a network side for determining a PMI parameter for joint transmission, and one of the reference signals is associated with one TRP; and
    transmitting, by the terminal, a PMI parameter for multi-TRP joint transmission, wherein for the target PMI parameters of multiple target TRPs associated with the multiple target reference signals, the terminal transmits one parameter value for the target PMI parameters.

2. The method according to claim 1, wherein the target PMI parameter comprises at least one of the following:

    spatial domain information, wherein the spatial domain information is indication information corresponding to a spatial domain beam in the PMI parameter;

frequency domain information, wherein the frequency domain information is delay indication information corresponding to a delay domain in the PMI parameter; and

time domain information, wherein the time domain information is Doppler indication information corresponding to a time domain or a Doppler domain in the PMI parameter.

3. The method according to claim 1 or 2, wherein the target information comprises one of the following:

a transmission configuration indicator (TCI) state associated with each reference signal among the multiple reference signals;

the multiple reference signals;

a first target high-layer signaling; and

a predetermined rule.

4. The method according to claim 3, wherein

the multiple reference signals comprise one of the following: multiple channel state information reference signals (CSI-RS) and multiple CSI-RS port groups of one CSI-RS; and

the determining, by a terminal according to target information, that a same target PMI parameter is fed back for multiple target reference signals among multiple reference signals comprises one of the following:

determining, by the terminal, that target PMI parameters corresponding to multiple first target CSI-RSs are identical according to TCI states associated with the multiple CSI-RSs, wherein TCI states associated with the multiple first target CSI-RSs are identical;

determining, by the terminal, that target PMI parameters corresponding to multiple second target CSI-RSs are identical according to CSI-RSs of a first predetermined quasi co-location (QCL) type indicated by TCI states associated with the multiple CSI-RSs, wherein CSI-RSs of the first predetermined QCL type indicated by TCI states associated with the multiple second target CSI-RSs are identical, and the first predetermined QCL type comprises at least one of the following: QCL type A, QCL type B, QCL type C, and QCL type D;

determining, by the terminal, that target PMI parameters corresponding to multiple first target CSI-RS port groups are identical according to TCI states associated with the multiple CSI-RS port groups, wherein TCI states associated with the multiple first target CSI-RS ports are identical; and

determining, by the terminal, that target PMI parameters corresponding to multiple second target CSI-RS port groups are identical according to CSI-RSs of a second predetermined QCL type indicated by TCI states associated with the multiple CSI-RS port groups, wherein CSI-RSs of the second predetermined QCL type indicated by TCI states associated with the multiple second target CSI-RS port groups are identical, and the second predetermined QCL type comprises one of the following: QCL type A, QCL type B, QCL type C, and QCL type D.

5. The method according to claim 4, wherein the determining, by the terminal, that target PMI parameters corresponding to multiple second target CSI-RSs are identical comprises one of the following:

determining, by the terminal, that at least one of spatial domain information, frequency domain information and time domain information corresponding to the multiple second target CSI-RSs is identical in a case that the first predetermined QCL type does not comprise QCL type D and CSI-RSs of QCL type A indicated by the TCI states associated with the multiple second target CSI-RSs are identical;

determining, by the terminal, that time domain information corresponding to the multiple second target CSI-RSs is identical in a case that the first predetermined QCL type does not comprise QCL type D and CSI-RSs of QCL type B indicated by the TCI states associated with the multiple second target CSI-RSs are identical;

determining, by the terminal, that spatial domain information corresponding to the multiple second target CSI-RSs is identical in a case that the first predetermined QCL type comprises QCL type D and CSI-RSs of QCL type D indicated by the TCI states associated with the multiple second target CSI-RSs are identical; and

determining, by the terminal, that at least one of spatial domain information, frequency domain information and time domain information corresponding to the multiple second target CSI-RSs is identical in a case that the first predetermined QCL type comprises QCL type D, CSI-RSs of QCL type D indicated by the TCI states associated with the multiple second target CSI-RSs are identical, and CSI-RSs of QCL type A indicated by the TCI states associated with the multiple second target CSI-RSs are identical.

6. The method according to claim 4, wherein the determining, by the terminal, that target PMI parameters corresponding to multiple second target CSI-RS port groups are identical comprises one of the following:

determining, by the terminal, that at least one of spatial domain information, frequency domain information and time domain information corresponding to the multiple second target CSI-RS port groups is identical in a case that the second predetermined QCL type does not comprise QCL type D and CSI-RSs of QCL type A indicated by the TCI states associated with the multiple second target CSI-RS port groups are identical;

determining, by the terminal, that time domain information corresponding to the multiple second target CSI-RS port groups is identical in a case that the second predetermined QCL type does not comprise QCL type D and CSI-RSs of QCL type B indicated by the TCI states associated with the multiple second target CSI-RS port groups are identical;

determining, by the terminal, that spatial domain information corresponding to the multiple second target CSI-RS port groups is identical in a case that the second predetermined QCL type comprises QCL type D and CSI-RSs of QCL type D indicated by the TCI states associated with the multiple second target CSI-RS port groups are identical; and

determining, by the terminal, that at least one of spatial domain information, frequency domain information and time domain information corresponding to the multiple second target CSI-RS port groups is identical in a case that the second predetermined QCL type comprises QCL type D, CSI-RSs of QCL type D indicated by the TCI states associated with the multiple second target CSI-RS port groups are identical, and CSI-RSs of QCL type A indicated by the TCI states associated with the multiple second target CSI-RS port groups are identical.

7. The method according to claim 3, wherein the determining, by a terminal according to target information, that a same target PMI parameter is fed back for multiple target reference signals among multiple reference signals comprises:

obtaining, by the terminal, spatial domain information, frequency domain information and time domain information corresponding to each reference signal according to each reference signal; and

determining, by the terminal, that the target PMI parameters corresponding to the multiple target reference signals are identical according to the spatial domain information, the frequency domain information and the time domain information corresponding to each reference signal.

8. The method according to any one of claims 4 to 7, wherein the transmitting, by the terminal, a PMI parameter for multi-TRP joint transmission comprises:
dividing, by the terminal, the multiple TRPs into at least one TRP group or dividing the multiple reference signals into at least one reference signal group, and transmitting PMI parameters corresponding to each TRP group or reference signal group in groups, wherein the target PMI parameters corresponding to the TRPs in one TRP group are identical or the target PMI parameters corresponding to the reference signals in one reference signal group are identical.

9. The method according to claim 8, wherein the transmitting, by the terminal, PMI parameters of each TRP group in groups comprises:
mapping, by the terminal, the PMI parameters corresponding to each TRP group or reference signal group into a CSI for transmitting, wherein a first part of the CSI comprises indication information about the number of the TRP groups or reference signal groups.

10. The method according to claim 9, wherein the first part of the CSI further comprises indication information about a grouping mode of the multiple TRPs or the multiple reference signals, or, the first part of the CSI comprises indication information about a grouping mode of the multiple TRPs or the multiple reference signals.

11. The method according to claim 3, wherein the first target high-layer signaling comprises at least one of the following:

a first high-layer signaling for indicating a spatial domain information reference signal;
a second high-layer signaling for indicating a frequency domain information reference signal; and
a third high-layer signaling for indicating a time domain information reference signal.

12. The method according to claim 11, wherein the first target high-layer signaling is associated with a CSI report configuration, and the first target high-layer signaling is configured in one of the following:

a CSI resource set information element;
a CSI resource information element; and

a codebook configuration information element.

13. The method according to claim 3, wherein the predetermined rule indicates at least one of the following:

   a spatial domain information reference signal;
   a frequency domain information reference signal; and
   a time domain information reference signal.

14. The method according to claim 13, wherein the reference signal indicated by the predetermined rule comprises one of the following:

   a reference signal corresponding to a minimum CSI-RS identifier among the multiple reference signals associated with the same TCI state;
   a reference signal corresponding to a minimum CSI-RS port group identifier among the multiple reference signals associated with the same TCI state;
   a reference signal corresponding to a CSI-RS port group having a minimum sum of port numbers associated with the CSI-RS port group among the multiple reference signals associated with the same TCI state;
   a reference signal corresponding to a minimum CSI-RS identifier among the multiple reference signals comprising reference signals associated with the same QCL type;
   a reference signal corresponding to a minimum CSI-RS port group identifier among the multiple reference signals comprising reference signals associated with the same QCL type;
   a reference signal corresponding to a CSI-RS port group having a minimum sum of port numbers associated with the CSI-RS port group among the multiple reference signals comprising reference signals associated with the same QCL type; and
   a reference signal corresponding to a most recent CSI-RS measurement among the multiple reference signals comprising reference signals associated with the same QCL type.

15. The method according to any one of claims 11 to 14, wherein the determining, by a terminal according to target information, that one parameter value is fed back for a target PMI parameter corresponding to multiple target reference signals among multiple reference signals comprises at least one of the following:

   determining, by the terminal according to the first target high-layer signaling or the predetermined rule, that spatial domain information corresponding to the multiple reference signals refers to spatial domain information corresponding to a first reference signal and target spatial domain information is fed back jointly for reference signals referring to a same first reference signal and the same first reference signal, wherein the first reference signal is a spatial domain information reference signal indicated by the high-layer signaling or the predetermined rule, and the target spatial domain information is spatial domain information obtained according to the same first reference signal;
   determining, by the terminal according to the first target high-layer signaling or the predetermined rule, that frequency domain information corresponding to the multiple reference signals refers to frequency domain information corresponding to a second reference signal and target frequency domain information is fed back for reference signals referring to a same second reference signal and the same second reference signal, wherein the second reference signal is a frequency domain information reference signal indicated by the high-layer signaling or the predetermined rule, and the target frequency domain information is frequency domain information obtained according to the same second reference signal; and
   determining, by the terminal according to the first target high-layer signaling or the predetermined rule, that time domain information corresponding to the multiple reference signals refers to time domain information corresponding to a third reference signal and target time domain information is fed back jointly for reference signals referring to a same third reference signal and the same third reference signal, wherein the third reference signal is a time domain information reference signal indicated by the high-layer signaling or the predetermined rule, and the target time domain information is time domain information obtained according to the same third reference signal.

16. The method according to claim 15, wherein at least one of the following reference signals is one CSI-RS or part of ports corresponding to one CSI-RS:

   the spatial domain information reference signal;
   the frequency domain information reference signal; and

the time domain information reference signal.

17. The method according to claim 15, wherein at least one of the following reference signals is multiple CSI-RSs or multiple port groups corresponding to one CSI-RS:

the spatial domain information reference signal;
the frequency domain information reference signal; and
the time domain information reference signal.

18. The method according to claim 17, wherein at least one of the following reference signals has the same predetermined information:

reference signals referring to the first reference signal and the first reference signal;
reference signals referring to the second reference signal and the second reference signal; and
reference signals referring to the third reference signal and the third reference signal,
wherein the predetermined information comprises at least one of the following: an associated TCI state and an associated QCL type.

19. The method according to any one of claims 11 to 14, wherein the target information further comprises: a second target high-layer signaling, wherein the second target high-layer signaling is used for indicating at least one of the following:

first offset information of spatial domain information;
second offset information of frequency domain information; and
third offset information of time domain information.

20. The method according to claim 19, wherein

the first offset information comprises one of the following: a first offset of spatial domain information, the number of first offsets of spatial domain information, and a first offset set of spatial domain information, wherein the first offset is determined to indicate an optional offset of spatial domain information of a target reference signal referring to the first reference signal relative to first spatial domain information of the first reference signal, and the number of first offsets and the first offset set are both used for indicating the optional offset of the spatial domain information of the target reference signal referring to the first reference signal relative to the first spatial domain information of the first reference signal;
the second offset information comprises one of the following: a second offset of frequency domain information, the number of second offsets of frequency domain information, and a second offset set of frequency domain information, wherein the second offset is used for determining an optional offset of frequency domain information of a target reference signal referring to the second reference signal relative to first frequency domain information of the second reference signal, and the number of second offsets and the second offset set are both used for indicating the optional offset of the frequency domain information of the target reference signal referring to the second reference signal relative to the first frequency domain information of the second reference signal; and
the third offset information comprises one of the following: a third offset of time domain information, the number of third offsets of time domain information, and a third offset set of time domain information, wherein the third offset is used for determining an optional offset of time domain information of a target reference signal referring to the third reference signal relative to first time domain information of the third reference signal, and the number of third offsets and the third offset set are both used for indicating the optional offset of the time domain information of the target reference signal referring to the third reference signal relative to the first time domain information of the third reference signal.

21. The method according to claim 19, wherein the transmitting, by the terminal, a PMI parameter for multi-TRP joint transmission comprises at least one of the following:

transmitting, by the terminal, first spatial domain information obtained according to a first reference signal indicated by the first target high-layer signaling and first target offset information of spatial domain information of a first other reference signal relative to the first spatial domain information, wherein the first target offset information is determined according to the first offset information, and the first other reference signal is a reference signal other than the first reference signal among the multiple reference signals;
transmitting, by the terminal, first frequency domain information obtained according to a second reference signal indicated by the first target high-layer signaling and second target offset information of frequency domain information of a second other reference signal relative to the first frequency domain information, wherein the second target offset information is determined according to the second offset information, and the second other reference signal is a reference signal other than the second reference signal among the multiple reference signals; and

transmitting, by the terminal, first time domain information obtained according to a third reference signal indicated by the first target high-layer signaling and third target offset information of time domain information of a third other reference signal relative to the first time domain information, wherein the third target offset information is determined according to the third offset information, and the third other reference signal is a reference signal other than the third reference signal among the multiple reference signals.

22. The method according to claim 21, wherein before the transmitting, by the terminal, first frequency domain information obtained according to a second reference signal indicated by the first target high-layer signaling and second target offset information of frequency domain information of a second other reference signal relative to the first frequency domain information, the method further comprises:

mapping, for the frequency domain information of each reference signal, the frequency domain information corresponding to a strongest coefficient of the reference signal to a position where a delay is a predetermined value by cyclic shifting.

23. The method according to claim 22, wherein for each reference signal, a sequence length of a non-zero coefficient indicator of the reference signal in the PMI parameter is: $2*L\_i*M\_v\_ref$, wherein $L\_i$ is the number of beams corresponding to the reference signal, and $M\_v\_ref$ is the size of a frequency domain information set at rank v corresponding to the second reference signal.

24. The method according to claim 21, wherein before the transmitting, by the terminal, first frequency domain information obtained according to a second reference signal indicated by the first target high-layer signaling and second target offset information of frequency domain information of a second other reference signal relative to the first frequency domain information, the method further comprises:

mapping the frequency domain information corresponding to a strongest coefficient in the multiple reference signals to a position where a delay is a predetermined value by cyclic shifting.

25. The method according to claim 24, wherein a sequence length of a non-zero coefficient indicator corresponding to an $i^{th}$ reference signal among the multiple reference signals in the PMI parameter is: a bit sequence of $2*L\_i*max(M\_v\_i)$, wherein $L\_i$ is the number of beams corresponding to the $i^{th}$ reference signal i, $M\_v\_i$ is the size of a frequency domain information set at rank v corresponding to the $i^{th}$ reference signal i, and max(.) represents a max operation.

26. The method according to any one of claims 1 to 25, wherein

in a case that the PMI parameter does not comprise time domain information, non-zero coefficient indicators in a coefficient matrix corresponding to the target reference signals having the same frequency domain information and spatial domain information are identical; or,

in a case that the PMI parameter comprises time domain information, non-zero coefficient indicators in a coefficient matrix corresponding to the target reference signals having the same frequency domain information, spatial domain information and time domain information are identical.

27. The method according to claim 26, wherein

a sequence length of the non-zero coefficient indicators in the coefficient matrix corresponding to the target reference signals having the same frequency domain information and spatial domain information is: $2*L*M\_v$, wherein L is the number of beams corresponding to one reference signal, and $M\_v$ is the size of a frequency domain information set at rank v corresponding to one reference signal; or,

a sequence length of the non-zero coefficient indicators in the coefficient matrix corresponding to the target reference signals having the same frequency domain information, spatial domain information and time domain information is: $2*L*M\_v*T\_v$, wherein L is the number of beams corresponding to one reference signal, $M\_v$ is the size of a frequency domain information set at rank v corresponding to one reference signal, and $T\_v$ is the size of a time domain information set at rank v corresponding to one reference signal.

28. The method according to any one of claims 1 to 25, wherein in the PMI parameter transmitted by the terminal, at least one of the following overheads is determined by the number of reference signals of different predetermined information contained in reference signal associated with a trigger state:

an overhead of a frequency domain basis indicator or an overhead of a delay set indicator;
an overhead of a spatial domain basis indicator or an overhead of a spatial domain beam set indicator; and
an overhead of a time domain basis indicator or an overhead of a Doppler set indicator,
wherein the predetermined information comprises at least one of the following: a TCI state, QCL type A, QCL type B, QCL type C, and QCL type D.

29. The method according to claim 28, wherein the trigger state comprises: a trigger state indicated in downlink control information (DCI), or a trigger state pre-configured at the network side.

30. A PMI parameter feedback method for multi-TRP joint transmission, comprising:

obtaining, by a terminal, target PMI parameters corresponding to multiple reference signals, wherein the multiple reference signals are reference signals configured for determining a target PMI parameter for joint transmission, one of the reference signals is associated with one TRP, and the multiple reference signals comprise a first reference signal and a second reference signal;
obtaining, by the terminal, an offset of a first target PMI parameter corresponding to the first reference signal relative to a second target PMI parameter corresponding to the second reference signal; and
transmitting, by the terminal, the second target PMI parameter and the offset.

31. The method according to claim 30, wherein in a case that the number of the second reference signal is one, the second reference signal comprises one of the following:

a reference signal having a strongest energy among the multiple reference signals; and
a reference signal having a strongest coefficient among the multiple reference signals.

32. The method according to claim 30, wherein before the obtaining, by the terminal, an offset of a first target PMI parameter corresponding to the first reference signal relative to a second target PMI parameter corresponding to the second reference signal, the method further comprises:
dividing, by the terminal, the multiple reference signals into at least one reference signal group according to a high-layer signaling or a default rule, wherein target PMI parameters corresponding to reference signals in the same reference signal group are identical.

33. The method according to claim 32, wherein the at least one reference signal group comprises a first reference signal group and a second reference signal group, the first reference signal group comprises at least one said first reference signal, and the second reference signal group comprises at least one said second reference signal; and
the obtaining, by the terminal, an offset of a first target PMI parameter corresponding to the first reference signal relative to a second target PMI parameter corresponding to the second reference signal comprises:
obtaining, by the terminal, an offset of a first target PMI parameter of the first reference signal group relative to a second target PMI parameter corresponding to the second reference signal group.

34. The method according to claim 32 or 33, wherein the second reference signal group comprises one of the following:

a reference signal group having a strongest energy among the at least one reference signal group; and
a reference signal group having a strongest coefficient among the at least one reference signal group.

35. The method according to any one of claims 30 to 34, wherein the first target PMI parameter and the second target PMI parameter independently comprise at least one of the following:

spatial domain information, wherein the spatial domain information is indication information corresponding to a spatial domain beam in the PMI parameter;
frequency domain information, wherein the frequency domain information is delay indication information corresponding to a delay domain in the PMI parameter; and
time domain information, wherein the time domain information is Doppler indication information corresponding to a time domain or a Doppler domain in the PMI parameter.

**36.** A PMI parameter obtaining method for multi-TRP joint transmission, comprising:

configuring, by a network side device for a terminal, multiple reference signals for determining a PMI parameter for joint transmission, wherein one of the reference signals is associated with one TRP;

receiving, by the network side device, a PMI parameter for multi-TRP joint transmission transmitted by the terminal;

determining, by the network side device according to target information, that one parameter value is fed back for a target PMI parameter corresponding to multiple target reference signals among the multiple reference signals; and

obtaining, by the network side device, parameter values of the target PMI parameters from the received PMI parameters, and obtaining parameter values of the target PMI parameters corresponding to the multiple target reference signals according to the parameter values of the target PMI parameters.

**37.** The method according to claim 36, wherein the target information comprises one of the following:

a TCI state associated with the multiple reference signals;
a first target high-layer signaling configured for the terminal; and
a predetermined rule.

**38.** The method according to claim 37, wherein the first target high-layer signaling comprises at least one of the following:

a first high-layer signaling for indicating a spatial domain information reference signal;
a second high-layer signaling for indicating a frequency domain information reference signal; and
a third high-layer signaling for indicating a time domain information reference signal.

**39.** The method according to claim 38, wherein the first target high-layer signaling is associated with a CSI report configuration, and the first target high-layer signaling is configured in one of the following:

a CSI resource set information element;
a CSI resource information element; and
a codebook configuration information element.

**40.** The method according to claim 37, wherein the predetermined rule indicates at least one of the following:

a spatial domain information reference signal;
a frequency domain information reference signal; and
a time domain information reference signal.

**41.** The method according to any one of claims 38 to 40, wherein the determining, by the network side device according to target information, a target PMI parameter fed back by the terminal for multiple target reference signals among the multiple reference signals comprises at least one of the following:

determining, by the network side device according to the first target high-layer signaling or the predetermined rule, that spatial domain information corresponding to the multiple reference signals refers to spatial domain information corresponding to a first reference signal in a case that the PMI parameters are fed back by the terminal and target spatial domain information is fed back jointly for reference signals referring to a same first reference signal and the same first reference signal, wherein the first reference signal is a spatial domain information reference signal indicated by the high-layer signaling or the predetermined rule, and the target spatial domain information is spatial domain information obtained according to the same first reference signal;

determining, by the network side device according to the first target high-layer signaling or the predetermined rule, that frequency domain information corresponding to the multiple reference signals refers to frequency domain information corresponding to a second reference signal in a case that the PMI parameters are fed back by the terminal and target frequency domain information is fed back jointly for reference signals referring to a same second reference signal and the same second reference signal, wherein the second reference signal is a frequency domain information reference signal indicated by the high-layer signaling or the predetermined rule, and the target frequency domain information is frequency domain information obtained according to the same second reference signal; and

determining, by the network side device according to the first target high-layer signaling or the predetermined rule, that time domain information corresponding to the multiple reference signals refers to time domain information corresponding to a third reference signal in a case that the PMI parameters are fed back by the terminal and target time domain information is fed back jointly for reference signals referring to a same third reference signal and the same third reference signal, wherein the third reference signal is a time domain information reference signal indicated by the high-layer signaling or the predetermined rule, and the target time domain information is time domain information obtained according to the same third reference signal.

42. The method according to any one of claims 38 to 40, wherein the target information further comprises: a second target high-layer signaling configured for the terminal, wherein the second target high-layer signaling is used for indicating at least one of the following:

first offset information of spatial domain information;
second offset information of frequency domain information; and
third offset information of time domain information.

43. The method according to claim 42, wherein the obtaining, by the network side device, parameter values of the target PMI parameters from the received PMI parameters, and obtaining parameter values of the target PMI parameters corresponding to the multiple target reference signals according to the parameter values of the target PMI parameters comprises:
obtaining, by the network side device, parameter values of the target PMI parameters and corresponding target offset information from the received PMI parameters, and obtaining parameter values of the target PMI parameters corresponding to the multiple target reference signals according to the parameter values of the target PMI parameters and the target offset information.

44. A PMI parameter obtaining method for multi-TRP joint transmission, comprising:

configuring, by a network side device for a terminal, multiple reference signals for determining a PMI parameter for joint transmission, wherein one of the reference signals is associated with one TRP, and the multiple reference signals comprise a first reference signal and a second reference signal;
receiving, by the network side device from the terminal, a second target PMI parameter corresponding to the second reference signal and an offset of a first target PMI parameter of the first reference signal relative to the second target PMI parameter; and
obtaining, by the network side device, the second target PMI parameter corresponding to the second reference signal and the first target PMI parameter corresponding to the first reference signal according to the second target PMI parameter and the offset of the first target PMI parameter relative to the second target PMI parameter.

45. The method according to claim 44, wherein before the receiving, by the network side device from the terminal, a second target PMI parameter and an offset of each first target PMI parameter relative to the second target PMI parameter, the method further comprises:
configuring, by the network side device, a high-layer signaling for the terminal, wherein the high-layer signaling indicates division of the multiple reference signals into at least one reference signal group, and target PMI parameters corresponding to reference signals in the same reference signal group are identical.

46. The method according to claim 45, wherein the at least one reference signal group comprises a first reference signal group and a second reference signal group, the first reference signal group comprises at least one said first reference signal, and the second reference signal group comprises at least one said second reference signal; and
the obtaining, by the network side device, the second target PMI parameter corresponding to the second reference signal and the first target PMI parameter corresponding to each first reference signal according to the second target PMI parameter and the offset of each first target PMI parameter relative to the second target PMI parameter comprises:
determining, by the network side device, that a target PMI parameter of each second reference signal in the second reference signal group is the second target PMI parameter, and determining a first target PMI parameter of each first reference signal in each first reference signal group according to the second target PMI parameter and the offset.

47. A PMI parameter feedback apparatus for multi-TRP joint transmission, comprising:

a first determination module, configured to determine according to target information that one parameter value is fed back for a target PMI parameter corresponding to multiple target reference signals among multiple reference signals, wherein the multiple reference signals are configured by a network side for determining a PMI parameter for joint transmission, and one of the reference signals is associated with one TRP; and

a first transmitting module, configured to transmit a PMI parameter for multi-TRP joint transmission, wherein for the target PMI parameters of multiple target TRPs associated with the multiple target reference signals, one parameter value for the target PMI parameters is transmitted.

48. A PMI parameter feedback apparatus for multi-TRP joint transmission, comprising:

a first obtaining module, configured to obtain target PMI parameters corresponding to multiple reference signals, wherein the multiple reference signals are reference signals configured for determining a target PMI parameter for joint transmission, one of the reference signals is associated with one TRP, and the multiple reference signals comprise a first reference signal and a second reference signal;

a second obtaining module, configured to obtain an offset of a first target PMI parameter corresponding to the first reference signal relative to a second target PMI parameter corresponding to the second reference signal; and

a second transmitting module, configured to transmit the second target PMI parameter and the offset.

49. A PMI parameter obtaining apparatus for multi-TRP joint transmission, comprising:

a first configuration module, configured to configure for a terminal multiple reference signals for determining a PMI parameter for joint transmission, wherein one of the reference signals is associated with one TRP;

a first receiving module, configured to receive a PMI parameter for multi-TRP joint transmission transmitted by the terminal;

a second determination module, configured to determine according to target information that one parameter value is fed back for a target PMI parameter corresponding to multiple target reference signals among the multiple reference signals; and

a third obtaining module, configured to obtain parameter values of the target PMI parameters from the received PMI parameters, and obtain parameter values of the target PMI parameters corresponding to the multiple target reference signals according to the parameter values of the target PMI parameters.

50. A PMI parameter obtaining apparatus for multi-TRP joint transmission, comprising:

a second configuration module, configured to configure for a terminal multiple reference signals for determining a PMI parameter for joint transmission, wherein one of the reference signals is associated with one TRP, and the multiple reference signals comprise a first reference signal and a second reference signal;

a second receiving module, configured to receive from the terminal a second target PMI parameter corresponding to the second reference signal and an offset of a first target PMI parameter of the first reference signal relative to the second target PMI parameter; and

a fourth obtaining module, configured to obtain the second target PMI parameter corresponding to the second reference signal and the first target PMI parameter corresponding to the first reference signal according to the second target PMI parameter and the offset of the first target PMI parameter relative to the second target PMI parameter.

51. A terminal, comprising a processor and a memory, the memory storing programs or instructions executable on the processor, wherein the programs or instructions, when executed by the processor, implement the steps of the PMI parameter feedback method for multi-TRP joint transmission according to any one of claims 1 to 35.

52. A network side device, comprising a processor and a memory, wherein the memory stores programs or instructions executable on the processor, and the programs or instructions, when executed by the processor, implement the steps of the PMI parameter obtaining method for multi-TRP joint transmission according to any one of claims 36 to 46.

53. A readable storage medium, storing programs or instructions, wherein the programs or instructions, when executed by a processor, implement the steps of the PMI parameter feedback method for multi-TRP joint transmission according to any one of claims 1 to 35, or implement the steps of the PMI parameter obtaining method for multi-TRP joint transmission according to any one of claims 36 to 46.

Network side
device

11

11

Terminal

Terminal

## FIG. 1

200

S210

A terminal determines, according to target information, that one
parameter value is fed back for a target PMI parameter corresponding to
multiple target reference signals among multiple reference signals

S212

The terminal transmits a PMI parameter for multi-TRP joint transmission,
where for the target PMI parameters of multiple target TRPs associated
with the multiple target reference signals, the terminal sends one
parameter value for the target PMI parameters

## FIG. 2

300

S310

A network side device configures, for a terminal, multiple reference signals for determining a PMI parameter for joint transmission, where one of the reference signals is associated with one TRP

S312

The network side device receives a PMI parameter for multi-TRP joint transmission transmitted by the terminal

S314

The network side device determines, according to target information, that one parameter value is fed back for a target PMI parameter corresponding to multiple target reference signals among the multiple reference signals

S316

The network side device obtains parameter values of the target PMI parameters from the received PMI parameters, and obtains parameter values of the target PMI parameters corresponding to the multiple target reference signals according to the parameter values of the target PMI parameters

FIG. 3

400

S410

A terminal obtains target PMI parameters corresponding to multiple reference signals

S412

The terminal obtains an offset of a first target PMI parameter corresponding to the first reference signal relative to a second target PMI parameter corresponding to the second reference signal

S414

The terminal transmits the second target PMI parameter and an offset of the first target PMI parameter relative to the second target PMI parameter

FIG. 4

500

S510

A network side device configures, for a terminal, multiple reference signals for determining a PMI parameter for joint transmission

S512

The network side device receives, from the terminal, a second target PMI parameter corresponding to the second reference signal and an offset of a first target PMI parameter of the first reference signal relative to the second target PMI parameter

S514

The network side device obtains the second target PMI parameter corresponding to the second reference signal and the first target PMI parameter corresponding to the first reference signal according to the second target PMI parameter and the offset of the first target PMI parameter relative to the second target PMI parameter

FIG. 5

600

601

First determination module

602

First transmitting module

FIG. 6

700

701

First obtaining module

702

Second obtaining module

703

Second transmitting module

FIG. 7

FIG. 8

FIG. 9

FIG. 10

FIG. 11

FIG. 12

**EP 4 529 316 A1**

## INTERNATIONAL SEARCH REPORT

| | International application No. |
|---|---|
| | **PCT/CN2023/095097** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC; 3GPP: 多TRP, TRP, 预编码矩阵指示, PMI, 波束, 时延, 偏移, 多普勒, 参考信号, 端口, 准共址, 非零, 系数, multi-TRP, beam, time delay, offset, doppler, reference signal, port, nonzero, coefficient, QCL, CSI-RS, TCI

**C. DOCUMENTS CONSIDERED TO BE RELEVANT**

| Category* | Citation of document, with indication, where appropriate, of the relevant passages | Relevant to claim No. |
|---|---|---|
| X | CN 112292894 A (NEC CORP.) 29 January 2021 (2021-01-29) description, paragraphs [0050]-[0137] | 1-3, 11-13, 19, 28-30, 35-40, 42-45, 47-50 |
| A | CN 111431687 A (HUAWEI TECHNOLOGIES CO., LTD.) 17 July 2020 (2020-07-17) entire document | 1-53 |
| A | US 2021099981 A1 (COMCAST CABLE COMMUNICATIONS, LLC) 01 April 2021 (2021-04-01) entire document | 1-53 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2023** | **10 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| | | | | | | International application No.<br>**PCT/CN2023/095097** |
|---|---|---|---|---|---|---|

| Patent document<br>cited in search report | | | Publication date<br>(day/month/year) | Patent family member(s) | | Publication date<br>(day/month/year) |
|---|---|---|---|---|---|---|
| CN | 112292894 | A | 29 January 2021 | None | | |
| CN | 111431687 | A | 17 July 2020 | US | 2021337549 A1 | 28 October 2021 |
| US | 2021099981 | A1 | 01 April 2021 | CA | 3104643 A1 | 30 March 2021 |
| | | | | EP | 3799506 A1 | 31 March 2021 |
| | | | | US | 11523381 B2 | 06 December 2022 |
| | | | | US | 2023164797 A1 | 25 May 2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210550694